(19) Europäisches Patentamt
European Patent Office
Office européen des brevets

(11) EP 1 275 694 A1

(12) **EUROPEAN PATENT APPLICATION**
published in accordance with Art. 158(3) EPC

(43) Date of publication:
**15.01.2003 Bulletin 2003/03**

(21) Application number: **01921778.5**

(22) Date of filing: **30.03.2001**

(51) Int Cl.[7]: **C08L 69/00**, C08K 5/103, C08K 5/49, C08J 5/00

(86) International application number:
**PCT/JP01/02777**

(87) International publication number:
**WO 01/072901 (04.10.2001 Gazette 2001/40)**

(84) Designated Contracting States:
**AT BE CH CY DE DK ES FI FR GB GR IE IT LI LU MC NL PT SE TR**

(30) Priority: **30.03.2000 JP 2000093999**
**11.04.2000 JP 2000109386**
**07.09.2000 JP 2000271394**

(71) Applicant: **TEIJIN LIMITED**
**Osaka-shi Osaka 541-0054 (JP)**

(72) Inventors:
- **FUNAKOSHI, Wataru, Teijin Limited**
**Iwakuni-shi Yamaguchi 740-0 014 (JP)**
- **KAGEYAMA, Yuichi, Teijin Limited**
**Yamaguchi 740-0014 (JP)**
- **KANEKO, Hiroaki, Teijin Limited**
**Iwakuni-shi Yamaguchi 740-0014 (JP)**
- **SASAKI, Katsushi, Teijin Limited**
**Iwakuni-shi Yamaguchi 740-0014 (JP)**
- **MIYOSHI, Takanori, Teijin Limited**
**Iwakuni-shi Yamaguchi 740-0014 (JP)**

(74) Representative: **Hallybone, Huw George et al**
**Carpmaels and Ransford,**
**43 Bloomsbury Square**
**London WC1A 2RA (GB)**

(54) **AROMATIC POLYCARBONATE COMPOSITION, PROCESS FOR PRODUCING THE SAME, AND MOLDED ARTICLE THEREOF**

(57) An aromatic polycarbonate composition comprising at least one phosphonium salt selected from the group consisting of a phosphoric acid phosphonium salt, phosphonic acid phosphonium salt, condensed phosphoric acid phosphonium salt, phosphorous acid phosphonium salt, phosphonous acid phosphonium salt and boric acid phosphonium salt and has a viscosity average molecular weight of 10,000 to 100,000 and a melt viscosity stability of 0.5 % or less. The aromatic polycarbonate composition has excellent transparency, heat resistance and color stability. A process for producing the above aromatic polycarbonate composition is also disclosed.



Printed by Jouve, 75001 PARIS (FR)

## Description

Field of the Invention

The present invention relates to an aromatic polycarbonate composition, a production process therefor and a molded product thereof. More specifically, it relates to a polycarbonate resin composition having excellent transparency and color stability, a production process therefor and a molded product thereof.

Prior Art

Aromatic polycarbonate resins are used in a wide variety of fields thanks to their excellent mechanical properties such as impact resistance as well as excellent heat resistance and transparency. Known processes for producing the above polycarbonate resins include one in which an aromatic dihydroxy compound such as bisphenol A and phosgene as a carbonate bond forming precursor are directly reacted with each other (interfacial polymerization process) and one in which an ester exchange reaction is carried out between an aromatic dihydroxy compound and a carbonic acid diester as a carbonate bond forming precursor in a molten state (melting process).

The process for producing a polycarbonate resin through an ester exchange reaction between an aromatic dihydroxy compound and a carbonic acid diester (melting process) is considered as promising in the future because it is free from problems caused by using harmful phosgene and a halogen compound such as methylene chloride as a solvent and capable of produce a polycarbonate resin at a low cost as comparing of interfacial polymerization process.

In the melt polymerization process making use of an ester exchange reaction, an ester exchange catalyst is generally used to increase production efficiency as described in Plastic Material Lecture 17, Polycarbonate, pp. 48-53.

However, as an alkali metal catalyst is preferably used as the above ester exchange catalyst for the production of a polycarbonate resin in accordance with the melt polymerization process, the obtained polycarbonate resin contains an alkali metal compound derived from the catalyst and further metal compounds derived from a reactor or raw materials. Therefore, the polycarbonate resin produced by the melt polymerization process involves a stability problem. Particularly, it has such problems to be solved as coloring at the time of molding, a reduction in molecular weight and the formation of black foreign matter.

To solve these problems, JP-A 4-328124 and JP-A 4-328156 (the term "JP-A" as used herein means an "unexamined published Japanese patent application") propose a method by neutralizing an ester exchange catalyst with an acidic compound containing a sulfonic acid ester. However, as a strong acid may be by-produced from the sulfonic acid ester in this method, satisfactory solutions are not given to such problems as coloring, a reduction in molecular weight and the formation of black foreign matter at the time of molding and deterioration caused by hydrolysis or the like at the time of using this polycarbonate molded product.

When a sulfonic acid phosphonium salt is added alone to a polycarbonate resin produced by the melt polymerization process, preferably together with a phosphorous acid ester-based compound and a phenol-based antioxidant in accordance with the method of JP-A 8-59975, the above problems are considerably improved. However, for such application purposes which require high heat-resistant stability as optical information recording media, optical lenses and heat resistant molded products, such a problem as a reduction in the molecular weight of a polycarbonate, the coloring of a molded product or the formation of black foreign matter in the molded product still remains unsolved when the composition is stored under a high-temperature environment for a long time and molded.

Summary of the Invention

It is an object of the present invention to provide a polycarbonate resin composition whose molecular weight reduction and coloring and the formation of black foreign matter from which are suppressed when it is molded by heating.

It is another object of the present invention to provide a polycarbonate resin composition which is capable of suppressing a reduction in molecular weight, coloring and the formation of black foreign matter stably to low levels even when it is molded by heating after it is kept for a long time.

It is still another object of the present invention to provide an industrially advantageous process for producing the polycarbonate resin composition of the present invention.

It is a further object of the present invention to provide a molded product of the polycarbonate resin composition of the present invention, particularly a substrate for optical information recording media or an optical material.

Other objects and advantages of the present invention will become apparent from the following description.

According to the present invention, firstly, the above objects and advantages of the present invention are attained by an aromatic polycarbonate composition comprising:

(A) an aromatic polycarbonate essentially composed of a recurring unit represented by the following formula (1):

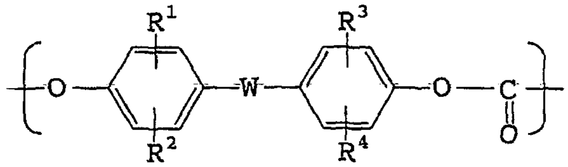

(1)

wherein $R^1$, $R^2$, $R^3$ and $R^4$ are each independently a hydrogen atom, alkyl group having 1 to 10 carbon atoms, aryl group having 6 to 10 carbon atoms or aralkyl group having 7 to 10 carbon atoms, and W is an alkylene group having 1 to 6 carbon atoms, alkylidene group having 2 to 10 carbon atoms, cycloalkylene group having 6 to 10 carbon atoms, cycloalkylidene group having 6 to 10 carbon atoms, alkylene-arylene-alkylene group having 8 to 15 carbon atoms, oxygen atom, sulfur atom, sulfoxide group or sulfone group, and
(B) at least one phosphonium salt (may be referred to as "specific phosphonium salt" hereinafter) selected from the group consisting of a phosphoric acid phosphonium salt, phosphonic acid phosphonium salt, condensed phosphoric acid phosphonium salt, phosphorous acid phosphonium salt, phosphonous acid phosphonium salt and boric acid phosphonium salt, and
having a viscosity-average molecular weight of 10,000 to 100,000 and a melt viscosity stability of 0.5 % or less.

According to the present invention, secondly, the above objects and advantages of the present invention are attained by a process for producing an aromatic polyester composition (may be referred to as "first production process of the present invention" hereinafter) comprising the steps of:

(1) melt polycondensing a dihydroxy compound comprising mainly an aromatic dihydroxy compound represented by the following formula (2):

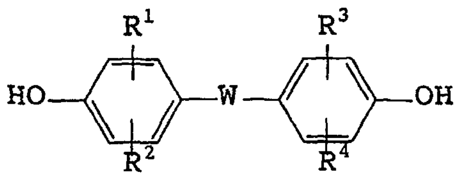

(2)

wherein $R^1$, $R^2$, $R^3$ and $R^4$ and W are as defined in the above formula (1),
and a carbonate diester in the presence of an ester exchange catalyst, and
(2) adding (a) at least one phosphonium salt selected from the group consisting of a phosphoric acid phosphonium salt, phosphonic acid phosphonium salt, condensed phosphoric acid phosphonium salt, phosphorous acid phosphonium salt,
phosphonous acid phosphonium salt and boric acid phosphonium salt, or (b) a combination of the above phosphonium salt and at least one sulfonic acid derivative selected from the group consisting of a sulfonic acid phosphonium salt, sulfonic acid ammonium salt, sulfonic acid lower alkyl ester and sulfonic acid to the obtained aromatic polycarbonate in molten state.

According to the present invention, thirdly, the above objects and advantages of the present invention are attained by a process for producing an aromatic polycarbonate composition (may be referred to as "second production process of the preset invention" hereinafter) comprising the steps of:

(1) preparing a pellet of an aromatic polycarbonate essentially composed of a recurring unit represented by the following formula (1):

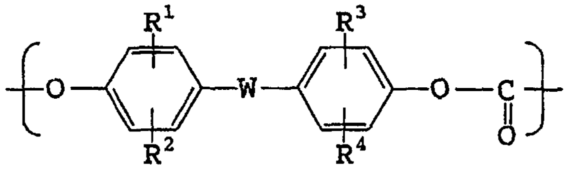

(1)

wherein $R^1$, $R^2$, $R^3$ and $R^4$ are each independently a hydrogen atom, alkyl group having 1 to 10 carbon atoms, aryl group having 6 to 10 carbon atoms or aralkyl group having 7 to 10 carbon atoms, and W is an alkylene group having 1 to 6 carbon atoms, alkylidene group having 2 to 10 carbon atoms, cycloalkylene group having 6 to 10 carbon atoms, cycloalkylidene group having 6 to 10 carbon atoms, alkylene-arylene-alkylene group having 8 to 15 carbon atoms, oxygen atom, sulfur atom, sulfoxide group or sulfone group, and

(2) melting the above pellet and adding and mixing at least one phosphonium salt selected from the group consisting of a phosphoric acid phosphonium salt, phosphonic acid phosphonium salt, condensed phosphoric acid phosphonium salt, phosphorous acid phosphonium salt, phosphonous acid phosphonium salt and boric acid phosphonium salt with the molten pellet.

According to the present invention, fourthly, the above objects and advantages of the present invention are attained by a molded product of the polycarbonate of the present invention such as a substrate for optical information recording media or a sheet.

Description of the Preferred Embodiments

A description is first given of the aromatic polycarbonate composition of the present invention.

The aromatic polycarbonate in the present invention is essentially composed of a recurring unit represented by the above formula (1).

In the above formula (1), $R^1$, $R^2$, $R^3$ and $R^4$ are as defined hereinabove.

The alkyl group having 1 to 10 carbon atoms may be linear or branched. Examples of the alkyl group having 1 to 10 carbon atoms include methyl, ethyl, propyl, butyl, octyl and decyl. Examples of the aryl group having 6 to 10 carbon atoms include phenyl, tolyl, cumyl and naphthyl. Examples of the aralkyl group having 7 to 10 carbon atoms include benzyl, 2-phenethyl and 1-methyl-1-phenylethyl.

$R^1$, $R^2$, $R^3$ and $R^4$ are preferably each independently a hydrogen atom, methyl group or t-butyl group, particularly preferably a hydrogen atom.

W is as defined hereinabove.

The alkylene group having 1 to 10 carbon atoms may be linear or branched. Examples of the alkylene group having 1 to 10 carbon atoms include methylene, 1,2-ethylene, 1,3-propylene, 1,4-butylene and 1,10-decylene.

Examples of the alkylidene group having 2 to 10 carbon atoms include ethylidene, 2,2-propylidene, 2,2-butylidene and 3,3-hexylidene.

Examples of the cycloalkylene group having 6 to 10 carbon atoms include 1,4-cyclohexylene and 2-isopropyl-1,4-cyclohexylene.

Examples of the cycloalkylidene group having 6 to 10 carbon atoms include cyclohexylidene and isopropylcyclohexylidene.

Examples of the alkylene-arylene-alkylene group having 8 to 15 carbon atoms include m-diisopropylphenylene.

W is preferably a cyclohexylidene group or 2,2-propylidene group, particularly preferably a 2,2-propylidene group.

The aromatic polycarbonate contains the recurring unit represented by the above formula (1) in an amount of 50 mol% or more, preferably 70 mol% or more, particularly preferably 80 mol% or more based on the total of all the recurring units. People of ordinary skill in the art will understand from the following description a recurring unit which may be contained according to circumstances other than the recurring unit represented by the above formula (1).

Desirably, the aromatic polycarbonate used in the present invention has main terminal groups which consist of an aryloxy group and a phenolic hydroxyl group and contains the phenolic terminal group in a concentration of preferably 50 mol% or less, more preferably 40 mol% or less, much more preferably 30 mol% or less. When the aromatic polycarbonate contains the phenolic terminal group in the above molar ratio, the object of the present invention can be attained more advantageously and also the moldability (mold contamination resistance, releasability; to be simply referred to as "moldability" hereinafter) of the composition improves.

When the concentration of the phenolic terminal group is reduced to 5 mol% or less, further improvement of the physical properties of the resin is rare. When the concentration of the phenolic terminal group is increased to 50 mol% or more, it is not preferred from the viewpoint of attaining the object of the present invention.

As the aryloxy group is preferably used a phenyloxy group substituted by a hydrocarbon group having 1 to 20 carbon atoms, or nonsubstituted phenyloxy group. The substituent is preferably a tertiary alkyl group, tertiary aralkyl group or aryl group from the viewpoint of resin heat stability.

Preferred examples of the aryloxy group include a phenoxy group, 4-t-butylphenyloxy group, 4-t-amylphenyloxy group, 4-phenylphenyloxy group and 4-cumylphenyloxy group.

The aromatic polycarbonate (A) is preferably obtained by melt polycondensing the corresponding aromatic dihydroxy compound and a carbonic acid diester as starting materials.

The aromatic polycarbonate (A) has a viscosity-average molecular weight of preferably 10,000 to 100,000, more preferably 10,000 to 50,000, much more preferably 10,000 to 18,000. The ratio (Mw/Mn) of the weight-average molecular weight (Mw) to the number-average molecular weight (Mn) of the aromatic polycarbonate is preferably 3.6 to 1.8, more preferably 3 to 2 from the viewpoints of resin fluidity and transferability.

The specific phosphonium salt (B) constituting the aromatic polycarbonate composition of the present invention is a phosphoric acid phosphonium salt, phosphonic acid phosphonium salt, condensed phosphoric acid phosphonium salt, phosphorous acid phosphonium salt, phosphonous acid phosphonium salt and boric acid phosphonium salt. They may be used alone or in combination of two or more.

The amount of the specific phosphonium salt used to stabilize the melt viscosity of the aromatic polycarbonate resin is preferably 0.01 x $10^{-4}$ to 30 x $10^{-4}$ part by weight in terms of the total of phosphorus atoms based on 100 parts by weight of the aromatic polycarbonate resin. It is more preferably 0.005 x $10^{-4}$ to 20 x $10^{-4}$ part by weight, much more preferably 0.01 x $10^{-3}$ to 10 x $10^{-4}$ part by weight, particularly preferably 0.05 x $10^{-3}$ to 8 x $10^{-4}$ part by weight.

The phosphoric acid phosphonium salt, condensed phosphoric acid phosphonium salt and phosphonic acid phosphonium salt are compounds for example represented by the following formula (3)-1:

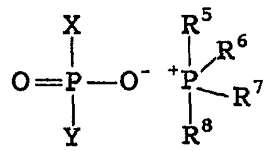

(3)-1

The phosphorous acid phosphonium salt and phosphonous acid phosphonium salt are compounds for example represented by the following formula (3)-2:

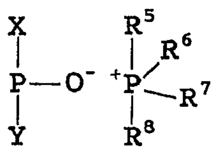

(3)-2

Further, the boric acid phosphonium salt is a compound for example represented by the following formula (3)-3:

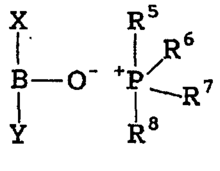

(3)-3

In the above formulas (3)-1, (3)-2 and (3)-3, $R^5$ to $R^8$ are each independently a hydrocarbon group having 1 to 10 carbon atoms, X and Y are each independently a hydroxy group, quaternary phosphonium group represented by the following formula (4), alkoxy group having 1 to 20 carbon atoms, cycloalkoxy group having 4 to 20 carbon atoms, aryloxy group having 6 to 20 carbon atoms, aralkyloxy group having 7 to 20 carbon atoms, alkyl group having 1 to 20

carbon atoms, cycloalkyl group having 4 to 20 carbon atoms, aryl group having 6 to 20 carbon atoms or aralkyl group having 7 to 20 carbon atoms.

That is, the quaternary phosphonium group represented by X and Y is at least one selected from a group of phosphonium salt compounds having a specific structure represented by the following formula (4):

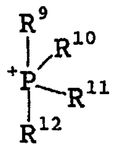 (4)

wherein $R^9$ to $R^{12}$ are as defined for $R^5$ to $R^8$, respectively.

Specific examples of the phosphonium salt represented by the above formula (3)-1 include phosphoric acid triphosphonium salts, phosphoric acid monohydrogen diphosphonium salts, phosphoric acid dihydrogen phosphonium salts, phosphonic acid diphosphonium salts and phosphonic acid monohydrogen phosphonium salts. Specific examples of the phosphonium salt represented by the above formula (3)-2 include phosphorous acid triphosphonium salts, phosphorous acid monohydrogen diphosphonium salts, phosphorous acid dihydrogen phosphonium salts, phosphonous acid diphosphonium salts and phosphonous acid monohydrogen phosphonium salts. Specific examples of the boric acid phosphonium salt represented by the above formula (3)-3 include boric acid triphosphonium salts, boric acid monohydrogen diphosphonium salts , boric acid dihydrogen phosphonium salts and one organic group substituted hydroxyboran phosphonium salts.

The phosphoric acid triphosphonium salts include tris(tetramethylphosphonium)phosphate, (tetramethylphosphonium)bis(tetraethylphosphonium) phosphate, (tetraoctylphosphonium)bis(tetrapropylphosphonium) phosphate, tris(methyltriethylphosphonium)phosphate, bis(tetramethylphosphonium)(tetraethylphosphonium) phosphate, tris (tetrabutylphosphonium)phosphate, tris(diethyldibutylphosphonium)phosphate, tris(tetradecylphosphonium)phosphate, tris(tetraphenylphosphonium)phosphate and tris(trimethylphenylphosphonium)phosphate.

The phosphoric acid monohydrogen diphosphonium salts include bis(tetramethylphosphonium)monohydrogen phosphate. bis(tetrabutylphosphonium)monohydrogen phosphate, bis(tetraoctylphosphonium)monohydrogen phosphate, bis(tetraphenylphosphonium)monohydrogen phosphate, bis[tetrakis(2,4-di-t-butylphenyl)phosphonium] monohydrogen phosphate, bis(tetrabenzylphosphonium)monohydrogen phosphate, bis(triethylbenzylphosphonium) monohydrogen phosphate, bis(trimethylbenzylphosphonium)monohydrogen phosphate, bis(diethyldioctylphosphonium)monohydrogen phosphate and bis(dimethyldiphenylphosphonium)monohydrogen phosphate.

The phosphoric acid dihydrogen phosphonium salts include tetramethylphosphonium dihydrogen phosphate, tetrabutylphosphonium dihydrogen phosphate, tetradecylphosphonium dihydrogen phosphate, tetrahexadecylphosphonium dihydrogen phosphate, tetraphenylphosphonium dihydrogen phosphate, tetrabenzylphosphonium dihydrogen phosphate, trimethylbenzylphosphonium dihydrogen phosphate, dimethyldibenzylphosphonium dihydrogen phosphate, ethyltriphenylphosphonium dihydrogen phosphate and butyltrinaphthylphosphonium dihydrogen phosphate.

The phosphonic acid diphosphonium salts include bis(tetramethylphosphonium)octanephosphonate, (tetramethylphosphonium)(tetraethylphosphonium) benzenephosphonate, (tetraoctylphosphonium)(tetrapropylphosphonium) benzylphosphonate, bis(methyltriethylphosphonium)nonanephosphonate, (tetramethylphosphonium)(tetraethylphosphonium) toluenephosphonate, bis(tetrabutylphosphonium)methanephosphonate, bis(diethyldibutylphosphonium)butanephosphonate, bis(tetradecylphosphonium)benzenephosphonate, bis(tetraphenylphosphonium)benzenephosphonate and bis(tetramethylphosphonium)benzenephosphonate.

The phosphonic acid monohydrogen phosphonium salts include (tetrabutylphosphonium)monohydrogen benzenephosphonate, (tetrabutylphosphonium)monohydrogen benzylphosphonate, tetramethylphosphonium monohydrogen octanephosphonate, tetramethylphosphonium monohydrogen benzenephosphonate, tetraoctylphosphonium monohydrogen benzylphosphonate, methyltriethylphosphonium monohydrogen nonanelphosphonate, tetraethylphosphonium monohydrogen toluenephosphonate, tetrabutylphosphonium monohydrogen methanephosphonate, diethyldibutylphosphonium monohydrogen butanephosphonate and tetraphenylphosphonium monohydrogen benzenephosphonate.

The phosphorous acid triphosphonium salts include tris(tetramethylphosphonium)phosphite, tris(tetrabutylphosphonium)phosphite, tris(tetraphenylphosphonium)phosphite, tris[tetrakis(2,4-di-t-butylphenyl)phosphonium] phosphite, tris(tetrabenzylphosphonium)phosphite, tris(methyltriethylphosphonium)phosphite, tris(trimethylbenzylphosphonium)phosphite, tris(dibutyldihexadecylphosphonium)phosphite, tris(dimethyldiphenylphosphonium)phosphite and bis(tetradecylphosphonium)(tetramethylphosphonium) phosphite.

The phosphorous acid monohydrogen diphosphonium salts include bis (tetramethylphosphonium)monohydrogen phosphite, bis(tetrabutylphosphonium)monohydrogen phosphite, bis(tetraphenylphosphonium)monohydrogen phosphite, bis[tetrakis(2,4-di-t-butylphenyl)phosphonium] monohydrogen phosphite, bis(tetrabenzylphosphonium) monohydrogen phosphite, bis(methyltriethylphosphonium)monohydrogen phosphite, bis(trimethylbenzylphosphonium)monohydrogen phosphite, bis(dibutyldihexadecylphosphonium)monohydrogen phosphite, bis(dimethyldiphenylphosphonium)monohydrogen phosphite and (tetradecylphosphonium)(tetramethylphosphonium) monohydrogen phosphite.

The phosphorous acid dihydrogen phosphonium salts include tetramethylphosphonium dihydrogen phosphite, tetrabutylphosphonium dihydrogen phosphite, tetrahexadecylphosphonium dihydrogen phosphite, tetraphenylphosphonium dihydrogen phosphite, tetrabenzylphosphonium dihydrogen phosphite, trimethylbenzylphosphonium dihydrogen phosphite, dimethyldibenzylphosphonium dihydrogen phosphite, ethyltriphenylphosphonium dihydrogen phosphite, butyltrinaphthylphosphonium dihydrogen phosphite and dibutyldioctylphosphonium dihydrogen phosphite.

The phosphonous acid diphosphonium salts include bis(tetrabutylphosphonium)benzenephosphonite, bis(tetrabutylphosphonium)benzylphosphonite, bis(tetramethylphosphonium)octanephosphonite, bis(tetramethylphosphonium)benzenephosphonite, bis(methyltriethylphosphonium)nonanphosphonite, bis(tetraethylphosphonium)toluenephosphonite, bis(tetrabutylphosphonium)methanephosphonite, bis(diethyldibutylphosphonium)butanephosphonite, bis(tetraphenylphosphonium)benzenephosphonite, bis(tetrabenzylphosphonium)benzylphosphonite, acidic bis(tetramethylphosphonium)hexanephosphonite and bis(tetraoctylphosphonium)naphthalenephosphonite.

The phosphonous acid monohydrogen phosphonium salts include (tetrabutylphosphonium)monohydrogen benzenephosphonite, (tetrabutylphosphonium)monohydrogen benzylphosphonite, tetramethylphosphonium monohydrogen octanephosphonite, tetramethylphosphonium monohydrogen benzenephosphonite, methyltriethylphosphonium monohydrogen nonanephosphonite, tetraethylphosphonium monohydrogen toluenephosphonite, tetrabutylphosphonium monohydrogen methanephosphonite, diethyldibutylphosphonium monohydrogen butanephosphonite, tetramethylphosphonium monohydrogen hexanephosphonite and tetraoctylphosphonium monohydrogen naphthalenephosphonite.

The boric acid triphosphonium salts include tris(tetramethylphosphonium)borate, tris(tetrabutylphosphonium) borate, tris(methyltriethylphosphonium)borate, tris(trimethylbenzylphosphonium)borate, tris(dibutyldihexadecylphosphonium)borate, tris(dimethyldiphenylphosphonium)borate, bis(tetradecylphosphonium)(tetramethylphosphonium) borate, bis(tetraphenylphosphonium)(tetramethylphosphonium) borate, bis(trimethylphenylphosphonium)(dimethyldiphenyl phosphonium)borate and bis(tetramethylphosphonium)(tetrabenzylphosphonium) borate.

The boric acid monohydrogen diphosphonium salts include bis(tetramethylphosphonium)monohydrogen borate, bis(tetrabutylphosphonium)monohydrogen borate, bis(methyltriethylphosphonium)monohydrogen borate, bis(trimethylbenzylphosphonium)monohydrogen borate, bis(dibutyldihexadecylphosphonium)monohydrogen borate, bis (dimethyldiphenylphosphonium)monohydrogen borate, (tetradecylphosphonium)(tetramethylphosphonium) monohydrogen borate, (tetraphenylphosphonium)(tetramethylphosphonium) monohydrogen borate, (trimethylphenylphosphonium)(dimethyldiphenylphosphonium )monohydrogen borate and (tetramethylphosphonium)(tetrabenzylphosphonium) monohydrogen borate.

The boric acid dihydrogen phosphonium salts include tetramethylphosphonium dihydrogen borate, tetrabutylphosphonium dihydrogen borate, tetrahexadecylphosphonium dihydrogen borate, tetraphenylphosphonium dihydrogen borate, tetrabenzylphosphonium dihydrogen borate, trimethylbenzylphosphonium dihydrogen borate, dimethyldibenzylphosphonium dihydrogen borate, diethyltriphenylphosphonium dihydrogen borate, butylphosphonium trinaphthylphosphonium dihydrogen borate and dibutylphosphonium trioctylphosphonium dihydrogen borate.

The one organic group-substituted boric acid diphosphonium salts include bis(tetramethylphosphonium)benzeneborate, bis(tetrabutylphosphonium)benzeneborate and bis(tetramethylphosphonium)benzylborate.

The one organic group-substituted boric acid monohydrogen phosphonium salts include tetramethylphosphonium monohydrogen benzeneborate, tetrabutylphosphonium monohydrogen benzeneborate and tetramethylphosphonium monohydrogen benzylborate.

Out of these specific phosphonium salts, particularly preferred are tris(tetramethylphosphonium)phosphate, tris(tetrabutylphosphonium)phosphate, bis(tetramethylphosphonium)monohydrogen phosphate, bis(tetrabutylphosphonium)monohydrogen phosphate, tetramethylphosphonium dihydrogen phosphate, tetrabutylphosphonium dihydrogen phosphate, bis(tetramethylphosphonium)benzenephosphonate, (tetrabutylphosphonium)monohydrogen benzenephosphonate, tris(tetramethylphosphonium)phosphite, tris(tetrabutylphosphonium)phosphite, bis(tetramethylphosphonium)monohydrogen phosphite, bis(tetrabutylphosphonium)monohydrogen phosphite, tetramethylphosphonium dihydrogen phosphite, tetrabutylphosphonium dihydrogen phosphite, bis(tetramethylphosphonium)benzenephosphonite, bis(tetrabutylphosphonium)benzenephosphonite, tris(tetramethylphosphonium)borate, tris (tetrabutylphosphonium)borate, bis(tetramethylphosphonium)monohydrogen borate, bis(tetrabutylphosphonium) monohydrogen borate, tetramethylphosphonium dihydrogen borate and tetrabutylphosphonium dihydrogen borate.

Out of the above phosphonium salts, preferred are acidic phosphonium salts, that is, acidic phosphoric acid phosphonium salts, acidic phosphonic acid phosphonium salts, condensed acidic phosphoric acid phosphonium salts,

acidic phosphorous acid phosphonium salts, acidic phosphonous acid phosphonium salts and acidic boric acid phosphonium salts.

In the present invention, an acidic phosphonium salt such as a sulfuric acid acidic phosphonium salt or a sulfurous acid acidic phosphonium salt may be further used in combination with one of these specific phosphonium salts as an optional component.

Examples of the sulfuric acid acidic phosphonium salt include tetramethylphosphonium monohydrogen sulfate, tetrabutylphosphonium monohydrogen sulfate, tetrapropylphosphonium monohydrogen sulfate, tetraoctylphosphonium monohydrogen sulfate, tetraphenylphosphonium monohydrogen sulfate, ethyltributylphosphonium monohydrogen sulfate, trimethyloctylphosphonium monohydrogen sulfate, tetrabenzylphosphonium monohydrogen sulfate, diethyldibutylphosphonium monohydrogen sulfate and benzyltrimethylphosphonium monohydrogen sulfate.

Examples of the sulfurous acid acidic phosphonium salt include tetramethylphosphonium monohydrogen sulfite, tetrabutylphosphonium monohydrogen sulfite, tetrapropylphosphonium monohydrogen sulfite, tetraoctylphosphonium monohydrogen sulfite, tetraphenylphosphonium monohydrogen sulfite, ethyltributylphosphonium monohydrogen sulfite, trimethyloctylphosphonium monohydrogen sulfite, tetrabenzylphosphonium monohydrogen sulfite, diethyldibutylphosphonium monohydrogen sulfite and benzyltrimethylphosphonium monohydrogen sulfite.

Out of the specific phosphonium salts, a phosphoric acid acidic phosphonium salt or mono- or di-alkali metal salt of an ester thereof, neutral phosphoric acid phosphonium salt, neutral sulfonic acid phosphonium salt, neutral sulfuric acid phosphonium salt or neutral sulfurous acid phosphonium salt may be optionally used in limits not prejudicial to the object of the present invention. The addition of these phosphonium salts provides the effect of improving the flame retardancy of a composition additionally.

As for the amount of the mono- or di-alkali metal salt, the total amount of phosphorus atoms contained in the compound is 0.001 to 50 wt% based on the total of phosphorus atoms contained in the used specific phosphoric acid acidic phosphonium salt. It is preferably 0.01 to 30 wt%, more preferably 0.05 to 10 wt% based on the same standard. The addition of the phosphonium salt provides the effect of improving the flame retardancy of a composition additionally.

A conventionally known melt viscosity stabilizer disclosed by the above documents can be added. The melt viscosity stabilizer is a phosphonium salt or ammonium salt of sulfonic acid, sulfonic acid or sulfonic acid lower ester. They may be used alone or in combination of two or more.

Specific examples of the compound include phosphonium salts and ammonium salts of sulfonic acid such as tetrabutylphosphonium octanesulfonate, tetrabutylphosphonium benzenesulfonate, tetrabutylphosphonium dodecylbenzenesulfonate, tetramethylammonium decanesulfonate and tetrabutylammonium dodecylbenzenesulfonate; and sulfonic acids and sulfonic acid lower esters such as aromatic sulfonic acids exemplified by p-toluenesulfonic acid, aliphatic sulfonic acids exemplified by hexadecanesulfonate, butyl benzensulfonate, butyl p-toluenesulfonate and butyl decanesulfonate. Out of these, sulfonic acid lower alkyl esters are preferred.

When "a specific phosphonium salt" and a melt viscosity stabilizer are used in combination, the amount of the melt viscosity stabilizer is preferably 0.7 to 50 chemical equivalents, more preferably 0.8 to 20 chemical equivalents, much more preferably 0.9 to 10 chemical equivalents based on 1 chemical equivalent of a basic alkali metal compound catalyst in the case of a phosphonium salt or ammonium salt of sulfonic acid and preferably 0.7 to 20 chemical equivalents, more preferably 0.8 to 10 chemical equivalents, much more preferably 0.9 to 5 chemical equivalents based on 1 chemical equivalent of a basic alkali metal compound catalyst in the case of a sulfonic acid or sulfonic acid lower ester compound.

As for the blending ratio of the specific phosphonium salt to the above melt viscosity stabilizer, the amount of the specific phosphonium salt compound is preferably at least 50 % (chemical equivalent) or more, more preferably 80 % or more, particularly preferably 90 % or more to obtain a stabilized polycarbonate resin having excellent transparency and color stability.

The aromatic polycarbonate composition of the present invention may further contain (C) a carbon radical scavenger.

Preferred examples of the above carbon radical scavenger include silanes represented by the following formula (A):

$$R^{01}R^{02}R^{03}SiH \qquad (A)$$

wherein $R^{01}$, $R^{02}$ and $R^{03}$ are each independently a hydrogen atom, alkyl group having 1 to 30 carbon atoms, alkoxyl group having 1 to 20 carbon atoms or aryl group having 6 to 20 carbon atoms which may have a substituent(s), and by the following formula (A)-1:

$$-O\text{-}SiY^1Y^2Y^3 \qquad (A)\text{-}1$$

wherein $Y^1$, $Y^2$ and $Y^3$ are each independently a hydrogen atom, alkyl group having 1 to 20 carbon atoms, alkoxyl group having 1 to 10 carbon atoms or aryl group having 6 to 20 carbon atoms which may have a substituent(s), acrylic acid aryl esters represented by the following formula (B):

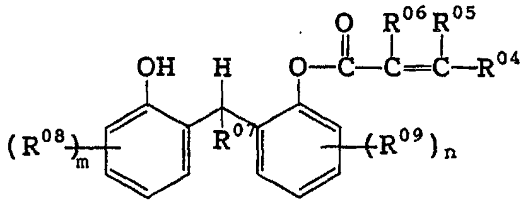

(B)

wherein $R^{04}$ and $R^{05}$ are each independently a hydrogen atom or alkyl group having 1 to 6 carbon atoms, $R^{06}$ is a hydrogen atom or methyl group, $R^{07}$ is a hydrogen atom, alkyl group having 1 to 6 carbon atoms or aryl group having 6 to 10 carbon atoms, $R^{08}$ and $R^{09}$ are each independently an alkyl group having 1 to 10 carbon atoms, and m and n are 0, 1 or 2,
and lactone-type stabilizers represented by the following formula (C):

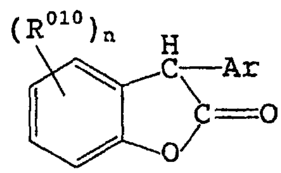

(C)

wherein $R^{010}$ is an alkyl group having 1 to 10 carbon atoms, n is an integer of 0 to 3, and Ar is an aromatic group having 6 to 20 carbon atoms which may have a substituent(s).

The definition and function of the C-radical scavenger are described in the paragraphs 2,1 and 2,5 of "Stabilization of Polymeric Materials" written by Hans Zweifel, pp. 52.

The amount of the C-radical scavenger is preferably 0.5 x $10^{-4}$ to 500 x $10^{-4}$ parts by weight, more preferably 5 x $10^{-4}$ to 300 x $10^{-4}$, much more preferably 10 x $10^{-4}$ to 300 x $10^{-4}$ parts by weight, particularly preferably 50 x $10^{-4}$ to 300 x $10^{-4}$ parts by weight based on 100 parts by weight of the aromatic polycarbonate.

When the amount of the C-radical scavenger is smaller than 0.5 x $10^{-4}$ parts by weight, the effect of reducing the amount of formed gel-like foreign matter and the effect of improving moist heat resistance and color stability are hardly obtained, and when the amount is larger than 500 x $10^{-4}$ parts by weight, the C-radical scavenger often exerts a bad influence upon the color, transparency and mechanical properties of the obtained polycarbonate.

The silanes represented by the above formula (A) include, for example, phenyldimethoxysilane, phenyldimethylsilane, benzyldimethylsilane, 1,2-bis(dimethylsilyl)benzene, 1,4-bis(dimethylsilyl)benzene, bis[(p-dimethylsilyl)phenyl]ether, bis(trimethylsiloxy)ethylsilane, bis(trimethylsiloxy)methylsilane, t-butyldimethylsilane, di-t-butylmethylsilane, di-t-butylsilane, dimethylethoxysilane, diphenylmethylsilane, diphenylsilane, ethylbis(trimethylsiloxy)silane, ethyldimethylsilane, hexylsilane, methyldiethoxysilane, methyltris(dimethylsiloxy)silane, n-octadecylsilane, n-octylsilane, pentamethylcyclopentasiloxane, phenyldiethoxysilane, phenyldimethylsilane, phenylmethylsilane, phenylsilane, tetraethylcyclotetrasiloxane, 1,3,5,7-tetramethylcyclotetrasiloxane, 1,1,4,4-tetramethyldisilylethylene, tri-t-butylsilane, triethoxysilane, triethylsilane, tri-n-hexylsilane, triisobutylsilane, triisopropoxysilane, triisopropylsilane and triphenylsilane.

The acrylates represented by the above formula (B) include, for example, 2-t-butyl-6-(3-t-butyl-2-hydroxy-5-methylbenzyl)-4-methylphenyl acrylate, 2-t-pentyl-6-(3-t-pentyl-2-hydroxy-5-methylbenzyl)-4-methylphenyl acrylate, 2-[1-(2-hydroxy-3,5-di-t-pentylphenyl)ethyl]-4,6-di-t-pentylphenyl acrylate, 2-[1-(2-hydroxy-3,5-di-t-butylphenyl)ethyl]-4,6-di-t-butylphenyl acrylate, 2-[1-(2-hydroxy-3-t-butyl-5-methylphenyl)ethyl]-4-methyl -6-t-butylphenyl acrylate, 2-[1-(2-hydroxy-3-t-pentyl-5-methylphenyl)ethyl]-4-methyl-6-t-pentylphenyl acrylate, 2,4-di-t-pentyl-6-(3,5-di-t-pentyl-2-hydroxy-benzyl)-phenyl acrylate and 2,4-di-t-butyl-6-(3,5-di-t-butyl-2-hydroxy-benzyl)-phenyl acrylate.

The lactone-type stabilizers represented by the above formula (C) include, for example, 3-phenyl-3H-benzofuran-2-one, 5,7-di-t-butyl-3-(3,4-dimethylphenyl)-3H-benzofuran-2-one, 5,7-di-t-butyl-3-(3,5-dimethylphenyl)-3H-benzofuran-2-one, 5,7-di-pentyl-3-(3,5-dimethylphenyl)-3H-benzofuran-2-one and 5,7-di-cumyl-3-(3,4-dimethylphenyl)-3H-benzofuran-2-one.

The aromatic polycarbonate composition of the present invention may further contain phosphoric acid, phosphorous acid, hypophosphorous acid, condensed phosphoric acid or condensed phosphorous acid as component (D). They may be used alone or in combination of two or more. The component (D) shows the function of preventing a reduction in the molecular weight or deterioration in the color of the aromatic polycarbonate. The component (D) is preferably used in an amount of $1 \times 10^{-4}$ to $100 \times 10^{-4}$ parts by weight based on 100 parts by weight of the aromatic polycarbonate. Examples of the condensed phosphoric acid include pyrophosphoric acid and polyphosphoric acid. Examples of the condensed phosphorous acid include pyrophosphorous acid and polyphosphorous acid.

The aromatic polycarbonate composition of the present invention may contain an ester of a polyhydric alcohol and a higher fatty acid (E) to improve releasability from a metal mold at the time of melt molding. The ester is preferably an ester of a polyhydric alcohol and a saturated or unsaturated higher fatty acid having 10 to 22 carbon atoms. The ester has an HLB value of preferably 3 to 7, more preferably 3 to 6. When an partial ester having an HLB value of 3 to 6 is used in conjunction with a specific phosphonium salt, the effects of improving releasability and suppressing the contamination of a metal mold are large.

The HLB value stands for and means hydrophile-lipophile balance as described in "Surfactant" written by Fumio Kitahara and other three and published by Kodansha Co., Ltd., pp. 24.

The partial ester which satisfies the above balance is a partial ester of a saturated or unsaturated aliphatic mono-, di- or tri-carboxylic acid and a saturated or unsaturated polyhydric alcohol. Examples of the polyhydric alcohol include saturated and unsaturated divalent alcohols such as ethylene glycol, propylene glycol, 1,4-butenediol and diethylene glycol, saturated and unsaturated trivalent alcohols such as glycerin and trimethylolpropane, saturated and unsaturated tetravalent alcohols such as pentaerythritol, and saturated and unsaturated polyhydric alcohols having a functionality of 5 or more.

Examples of the higher fatty acid include linear carboxylic acids such as lauric acid, myristic acid, palmitic acid, stearic acid and behenic acid, branched carboxylic acids such as isodecanoic acid, isotridecanoic acid, isomyristic acid, isopalmitic acid, isostearic acid and isoarachic acid, and other unsaturated carboxylic acids such as oleic acid, linoleic acid, linolenic acid, 5,8,11,14-eicosatetraenoic acid and 4,7,10,13,16,19-docosahexaenoic acid.

Examples of the polyhydric alcohol include propylene glycol, glycerin, 2,2-dihydroxyperfluoropropanol, neopentylene glycol, pentaerythritol and ditrimethylolpropane.

Examples of the partial ester of the polyhydric alcohol and the higher fatty acid include ethylene glycol monostearate, ethylene glycol monooleate, propylene glycol monooleate, propylene glycol monobehenate, propylene glycol monostearate, glycerol monostearate, glycerol monoisostearate, glycerol monolaurate, glycerol monooleate, glycerol monopalmitate, glycerol monoacetostearate, glycerol monobutylether, trimethylolpropane distearate and neopentylene glycol monostearate.

The amount of the ester is preferably $1 \times 10^{-3}$ to $3 \times 10^{-1}$ parts by weight, more preferably $5 \times 10^{-3}$ to $2 \times 10^{-1}$ parts by weight, particularly preferably $6 \times 10^{-3}$ to $1 \times 10^{-1}$ parts by weight based on 100 parts by weight of the aromatic polycarbonate. When the amount of the ester is outside the above range, a case inconvenient for attaining the object of the present invention may arise disadvantageously.

Other release agent whose examples are given below may be optionally used:

1) hydrocarbon-based release agents such as natural and synthetic paraffin waxes, polyethylene wax and fluorocarbons,
2) higher fatty acid-type or hydroxy fatty acid-type release agents such as stearic acid or hydroxystearic acid, such as trimethyrol propane,
3) fatty acid amide-based release agents such as fatty acid amides including ethylene bisstearylamide and alkylenebis fatty acid amides including erucic acid amide,
4) alcohol-type release agents such as aliphatic alcohols including stearyl alcohol and acetyl alcohol, polyhydric alcohols, polyglycols and polyglycerols, and
5) polysiloxanes.

The amount of the other release agent is preferably 0.0001 to 0.1 parts by weight based on 100 parts by weight of the aromatic polycarbonate resin of the present invention. They may be used alone or in admixture of two or more.

The aromatic polycarbonate resin composition of the present invention may contain a bluing agent (F) to improve the organoleptically favorable impression of amolded product. The bluing agent tends to discolor considerably at the time of heat melt molding. However, as the stabilization effect of the specific phosphonium salt is large in the composition of the present invention, the discoloration of the bluing agent is suppressed.

The bluing agent is preferably an organic bluing agent, particularly preferably an anthraquinone compound bluing agent.

Examples of the bluing agent include Solvent Violet 13 [CA. NO (color index number) 60725; Macrolex Violet B of Bayer AG, Dia Resin Blue G of Mitsubishi Chemical Co., Ltd., Sumiplast Violet B of Sumitomo Chemical Ind., Limited. and Plast Violet 8840 of Arimoto Kagaku Co., Ltd.], Solvent Violet 31 [CA. No.68210; Dia Resin Violet D of Mitsubishi Chemical Co., Ltd.], Solvent Violet 33 [CA. No.60725; Dia Resin Blue-J of Mitsubishi Chemical Co., Ltd.], Solvent Blue 94 [CA. No.61500; Dia Resin Blue-N of Mitsubishi Chemical Co., Ltd.], Solvent Violet 36 [CA. No.68210; Macrolex Violet 3R of Bayer AG], Solvent Blue 97 [Macrolex Blue-PR of Bayer AG], and Solvent Blue 45 [CA. No. 61110; Tetrazole Blue RLS of Sandoz AG, Macrolex Violet and Triazole Blue-RLS of Ciba Specialty Chemicals, Co., Ltd.]. Out of these, Macrolex Violet and Triazole Blue RLS are preferred.

These bluing agents may be used alone or in combination. The amount of the bluing agent is preferably 0.001 x $10^{-4}$ to 100 x $10^{-4}$ parts by weight, more preferably 0.01 x $10^{-4}$ to 10 x $10^{-4}$ parts by weight, much more preferably 0.05 x $10^{-4}$ to 5 x $10^{-4}$ parts by weight, particularly preferably 0.1 x $10^{-4}$ to 3 x $10^{-4}$ parts by weight based on 100 parts by weight of the resin component.

The aromatic polycarbonate composition of the present invention is preferably:

(i) an aromatic polycarbonate composition, wherein the aromatic polycarbonate (A) has a viscosity average molecular weight of 10,000 to 100,000, a melt viscosity stability of 0.5 % or less and a terminal hydroxy group concentration of 50 mol% or less based on the total of all the terminal groups,

(ii) an aromatic polycarbonate composition which comprises a phosphoric acid phosphonium salt and/or a phosphorous acid phosphonium salt as the phosphonium salt (B), phosphorus atoms in an amount of 0.01 x $10^{-4}$ to 30 x $10^{-4}$ parts by weight based on 100 parts by weight of the aromatic polycarbonate (A), and further an ester of a polyhydric alcohol and a higher fatty acid (E) in an amount of 1 x $10^{-3}$ to 3 x $10^{-1}$ parts by weight based on 100 parts by weight of the aromatic polycarbonate and optionally a C-radical scavenger (C), or

(iii) an aromatic polycarbonate composition which comprises a phosphoric acid phosphonium salt and/or a phosphorous acid phosphonium salt as the phosphonium salt (B), phosphorus atoms in an amount of 0.01 x $10^{-4}$ to 30 x $10^{-4}$ parts by weight based on 100 parts by weight of the aromatic polycarbonate (A), and further an ester of a polyhydric alcohol and a higher fatty acid (E) and a bluing agent (F) in amounts of 1 x $10^{-3}$ to 3 x $10^{-1}$ parts by weight and 0.001 x $10^{-4}$ to 100 x $10^{-4}$ parts by weight based on 100 parts by weight of the aromatic polycarbonate, respectively, and optionally a C-radical scavenger (C).

The aromatic polycarbonate composition of the present invention may further contain a solid filler such as an inorganic filler or organic filler in limits not prejudicial to the object of the present invention to improve rigidity and the like. Examples of the filler include lamellar or granular inorganic fillers such as talc, mica, glass flake, glass bead, calcium carbonate and titanium oxide, fibrous fillers such as glass fiber, glass milled fiber, wollastonite, carbon fiber, aramide fiber and metal-based conductive fiber, and organic particles such as crosslinked acryl particle and crosslinked silicone particle. The amount of the inorganic filler or organic filler is preferably 1 to 150 parts by weight, more preferably 3 to 100 parts by weight based on 100 parts by weight of the aromatic polycarbonate of the present invention.

The above inorganic filler may be surface treated with a silane coupling agent. A favorable effect such as the suppression of the decomposition of the aromatic polycarbonate is obtained by this surface treatment.

The aromatic polycarbonate composition of the present invention may contain another thermoplastic resin different from the aromatic polycarbonate (A) in limits not prejudicial to the object of the present invention.

Examples of the another resin include polyamide resin, polyimide resin, polyether imide resin, polyurethane resin, polyphenylene ether resin, polyphenylene sulfide resin, polysulfone resin, polyolefin resin such as polyethylene or polypropylene, polycarbonate resin, polyester resin such as polyethylene terephthalate or polybutylene terephthalate, amorphous polyarylate resin, polystyrene resin, acrylonitrile/styrene copolymer (AS resin), acrylonitrile/butadiene/styrene copolymer (ABS resin), polymethacrylate resin, phenol resin and epoxy resin.

The thermoplastic resin is contained in an amount of 10 to 150 parts by weight based on 100 parts by weight of the aromatic polycarbonate (A).

The aromatic polycarbonate composition of the present invention has a viscosity average molecular weight of 10,000 to 100,000. The viscosity average molecular weight is preferably 10,000 to 50,000, more preferably 10,000 to 18,000.

Further, the aromatic polycarbonate composition of the present invention has a melt viscosity stability of 0.5 % or less, preferably 0.2 % or less, ideally 0 %. A polycarbonate resin having poor melt viscosity stability is inferior in stability at the time of molding and the stability of mechanical properties under high humidity and during long-time use of a molded product, particularly marked deterioration or reduction in impact resistance, and cannot be put to practical use.

A description is subsequently given of the process for producing the aromatic polycarbonate composition of

the present invention.

The aromatic polycarbonate resin used in the present invention is produced by reacting a dihydroxy compound essentially composed of an aromatic dihydroxy compound represented by the above formula (2) and a carbonate bond forming precursor in accordance with a solution process or melting process. Out of these, the aromatic polycarbonate resin of the present invention is preferably produced by the melting process.

Illustrative examples of the aromatic dihydroxy compound include bis(4-hydroxyaryl)alkanes such as bis(4-hydroxyphenyl)methane, 2,2-bis(4-hydroxyphenyl)propane, 1,1-bis(4-hydroxyphenyl)ethane, 2,2-bis(4-hydroxy-3-methylphenyl)propane, bis(4-hydroxyphenyl)phenylmethane and 4,4'-dihydroxyphenyl-1,1'-m-diisopropylbenzene; bis(hydroxyaryl)cycloalkanes such as 1,1-bis(4-hydroxyphenyl)cyclohexane, 1,1-bis(4-hydroxyphenyl)-3,3,5-trimethylcyclohexane, 2,2,2',2'-tetrahydro-3,3,3',3'-tetramethyl-1,1'-spirobis -[1H-indene]-6,6'-diol and 9,9-bis(4-hydroxy-3-methylphenyl)fluorene; dihydroxyaryl ethers such as bis(4-hydroxyphenyl)ether; dihydroxydiaryl sulfides such as 4,4'-dihydroxydiphenyl sulfide and 4,4'-dihydroxy-3,3'-dimethyldiphenyl sulfide; dihydroxydiaryl sulfoxides such as 4,4'-dihydroxydiphenyl sulfoxide; dihydroxydiaryl sulfones such as 4,4'-dihydroxydiphenyl sulfone and 4,4'-dihydroxy-3,3'-dimethyldiphenyl sulfone; dihydroxydiaryl isatins such as 4,4'-dihydroxydiphenyl-3,3'-isatin; dihydroxydiaryl xanthenes such as 3,6-dihydroxy-9,9-dimethylxanthene; dihydroxydibenzenes such as resorcin, 5-phenylresorcin, 2-t-butylhydroquinone and 2-phenylhydroquinone; and dihydroxydiphenyls such as 4,4'-dihydroxydiphenyl.

Out of these, 2,2-bis(4-hydroxyphenyl)propane (may be abbreviated as BPA hereinafter) is preferred because its commercial products having high stability as a monomer and containing impurities in small quantities can be easily acquired.

In the present invention, one or more monomers may be copolymerized in the aromatic polycarbonate to control the glass transition temperature, improve fluidity, increase refractive index or reduce birefringence and control optical properties. The monomers include aliphatic dihydroxy compounds such as 1,4-butanediol, 1,4-cyclohexanedimethanol, 1,10-decanediol, 3,9-bis(1,1-dimethyl-2-hydroxyethyl)-2, 4,8,10-tetraoxaspiro[5,5]undecane, diethylene glycol and polytetramethylene glycol; dicarboxylic acids such as terephthalic acid, isophthalic acid, 2,6-naphthalenedicarboxylic acid, adipic acid and cyclohexanedicarboxylic acid; and oxy acids such as p-hydroxybenzoic acid, 6-hydroxy-2-naphthoic acid and lactic acid.

The carbonate bond forming precursor is a carbonyl halide such as phosgene or haloformate compound in the solution process and an aromatic carbonic acid diester such as diphenyl carbonate or ditolyl carbonate in the melting process. Dimethyl carbonate or dicyclohexyl carbonate may be used as desired. Out of these, diphenyl carbonate (may be abbreviated as DPC hereinafter) is preferred from the viewpoints of reactivity, stability against the coloring of the obtained resin and cost.

In the solid-phase polymerization process, a polycarbonate resin can be obtained by crystallizing a polycarbonate oligomer having a low molecular weight produced by the above solution process or melting process and polymerizing the crystallized oligomer in a solid state at a high temperature under reduced pressure as desired. The thus obtained polycarbonate resin can be preferably used as well in this invention.

A polyester carbonate containing an ester bond produced by using an ester bond forming precursor together with the carbonate bond forming precursor at the time of producing a polycarbonate may be used as the aromatic polycarbonate to which the present invention is directed to.

The ester bond forming precursor is a dicarboxylic acid or dicarboxylic acid derivative. Examples of these include aromatic dicarboxylic acid derivatives such as terephthalic acid, terephthalic acid chloride, isophthalic acid chloride, diphenyl terephthalate and diphenyl isophthalate; aliphatic dicarboxylic acid derivatives such as succinic acid, adipic acid, dodecanoic diacid, adipic acid chloride, decanoic diacid diphenylester and dodecanoic diacid diphenylester; and alicyclic dicarboxylic acid derivatives such as 1,3-cyclobutanedicarboxylic acid, 1,4-cyclohexanedicarboxylic acid, 1,3-cyclohexanedicarboxylic acid chloride, diphenyl cyclopropane dicarboxylate and diphenyl 1,4-cyclohexane dicarboxylate.

A polyfunctional compound having three or more functional groups in one molecule may be used in conjunction with the aromatic dihydroxy compound at the time of producing the above aromatic polycarbonate so as to attain the desired object. The polyfunctional compound is preferably a compound having a phenolic hydroxy group or carboxy group. Examples of the polyfunctional compound include 1,1,1-tris(4-hydroxyphenyl)ethane, α, α', α''-tris(4-hydroxyphenyl)-1,3,5-triisopropylbenzene, 4,6-dimethyl-2,4,6-tris(4-hydroxyphenyl)-heptane-2, 1,3,5-tris(4-hydroxyphenyl) benzene, trimellitic acid and pyromellitic acid.

Out of these, 1,1,1-tris(4-hydroxyphenyl)ethane, α, α', α''-tris(4-hydroxyphenyl)-1,3,5-triisopropylbenzene and trimellitic acid are preferred.

A tertiary amine, quaternary ammonium salt, quaternary phosphonium salt, nitrogen-containing heterocyclic compound or salt thereof, iminoether or salt thereof, or compound having an amide group may be used as a catalyst in the solution process for the production of the aromatic polycarbonate. In the solution process, a large amount of an alkali metal compound or alkali earth metal compound is used as an agent for trapping a hydrogen halide such as hydrochloric acid formed by a reaction. Therefore, it is preferred to completely wash or purify the produced polymer to

remove impurities contained therein.

In the melting process and solid-phase polymerization process, a catalyst containing an alkali metal compound is preferably used. It is advantageous when the amount of the catalyst is 5 x $10^{-8}$ to 1 x $10^{-6}$ chemical equivalent in terms of an alkali metal based on 1 mol of the aromatic dihydroxy compound. When the amount is outside the above range, the catalyst may exert a bad influence upon the physical properties of the obtained polycarbonate or an ester exchange reaction may not proceed fully, thereby making it difficult to obtain a polycarbonate having a high molecular weight.

The catalyst may be a prior known ester exchange catalyst such as an alkali metal compound or alkali earth metal compound exemplified by hydroxides, hydrocarbon compounds, carbonates, carboxylates, nitrates, nitrites, sulfites, cyanates, thiocyanates, borohydrides, hydrogenphosphates and aromatic hydroxy compounds.

Specific examples of the alkali metal compound include lithium hydroxide, sodium hydroxide, rubidium hydroxide, cesium hydroxide, lithium bicarbonate, potassium bicarbonate, rubidium bicarbonate, cesium bicarbonate, lithium carbonate, sodium carbonate, rubidium carbonate, cesium carbonate, lithium acetate, sodium acetate, potassium acetate, rubidium acetate, lithium stearate, rubidium stearate, cesium stearate, lithium benzoate, sodium benzoate, rubidium benzoate, cesium benzoate, cesium nitrate, rubidium nitrite, potassium sulfite. lithium cyanate, sodium cyanate, rubidium cyanate, cesium cyanate, lithium thiocyanate, potassium thiocyanate, rubidium thiocyanate, cesium thiocyanate, lithium borohydride, sodium borohydride, potassium borohydride, potassium tetraphenylborate, dilithium phosphite, potassium hypophosphite, dilithium hydrogenphosphate, trilithium phosphate, and dilithium salt, monolithium salt, lithium sodium salt of BPA, lithium phenoxide, sodium phenoxide, rubidium phenoxide, cesium phenoxide, lithium 2,6-di-t-butyl-4-methylphenoxide, sodium 2,6-di-t-butyl-4-methylphenoxide, rubidium 2,6-di-t-butyl-4-methylphenoxide and cesium 2,6-di-t-butyl-4-methylphenoxide.

Specific examples of the alkali earth metal compound include calcium hydroxide, strontium hydroxide, barium bicarbonate, barium carbonate, magnesium carbonate, barium acetate, magnesium myristate, strontium benzoate, calcium cyanate, barium cyanate, calcium thiocyanate and barium thiocyanate.

A basic nitrogen-containing compound and/or basic phosphorus-containing compound are/is preferably used as a co-catalyst.

The amount of the co-catalyst is 5 x $10^{-5}$ to 1 x $10^{-3}$ chemical equivalent, preferably 7 x $10^{-5}$ to 7 x $10^{-4}$ chemical equivalent based on 1 mol of the dihydroxy compound. When the amount is outside the above range, the co-catalyst may exert a bad influence upon the physical properties of the obtained polycarbonate or an ester exchange reaction does not proceed fully, thereby making it difficult to obtain a polycarbonate having a high molecular weight.

Examples of the basic nitrogen-containing compound include quaternary ammonium hydroxides having an alkyl, aryl or alkylaryl group such as tetramethylammonium hydroxide ($Me_4NOH$), tetrabutylammonium hydroxide ($Bu_4NOH$) and benzyltrimethylammonium hydroxide ($\phi$-$CH_2(Me)_3NOH$); basic ammonium salts having an alkyl, aryl or alkylaryl group such as tetramethylammonium acetate, tetraethylammonium phenoxide, tetrabutylammonium carbonates and hexadecyltrimethylammonium ethoxide; tertiary amines such as triethylamine; and basic salts such as tetramethylammonium borohydride ($Me_4NBH_4$), tetrabutylammonium borohydride ($Bu_4NBH_4$), and tetramethylammonium tetraphenyl borate ($Me_4NBPh_4$).

Examples of the basic phosphorus-containing compound include quaternary phosphonium hydroxides having an alkyl, aryl or alkylaryl group such as tetrabutylphosphonium hydroxide ($Bu_4POH$), benzyltrimethylphosphonium hydroxide ($\phi$-$CH_2(Me)_3POH$) and hexadecyltrimethylphosphonium hydroxide; and basic salts such as tetrabutylphosphonium borohydride ($Bu_4PBH_4$) and tetrabutylphosphonium tetraphenyl borate ($Bu_4PBPh_4$).

In the melt polymerization process out of the above polymerization processes, the concentration of a terminal hydroxy group must be reduced positively as an aromatic polycarbonate containing a phenolic terminal group in an concentration of 50 mol% or more is easily produced through a chemical reaction.

That is, the following conventionally known methods can be used to adjust the concentration of the terminal hydroxy group to the above range:

1) method of controlling the molar ratio of charge stocks; The DPC/BPA molar ratio is increased to a range of 1.03 to 1.10 at the time of charging for a polymerization reaction in consideration of the characteristic features of a polymerization reactor.

2) terminal capping method; At the end of a polymerization reaction, terminal OH groups are capped with a salicylic acid ester-based compound in accordance with a method disclosed by USP 5696222.

The amount of the salicylic acid ester-based compound is preferably 0.8 to 10 mols, more preferably 0.8 to 5 mols, particularly preferably 0.9 to 2 mols based on 1 chemical equivalent of the terminal hydroxy group before a capping reaction. By adding the salicylic acid ester-based compound in that weight ratio, 80 % or more of the terminal hydroxy groups can be capped advantageously. To carry out this capping reaction, catalysts enumerated in the description of the above US patent are preferably used. The concentration of the terminal hydroxy group is preferably

reduced in a stage before the deactivation of a polymerization catalyst.

Illustrative examples of the salicylic acid ester-based compound include 2-methoxycarbonylphenylaryl carbonates such as 2-methoxycarbonylphenyl phenyl carbonate and 2-methoxycarbonylphenyl cumylphenyl carbonate; 2-methoxycarbonylphenyl alkyl carbonates such as 2-methoxycarbonylphenyl lauryl carbonate; 2-ethoxycarbonylphenyl aryl carbonates such as 2-ethoxycarbonylpheny phenyl carbonate and 2-ethoxycarbonylphenyl hexylphenyl carbonate; 2-ethoxycarbonylphenyl alkyl carbonates such as 2-ethoxycarbonylphenyl octyl carbonate; (2'-methoxycarbonylphenyl)esters of aromatic carboxylic acids such as (2-methoxycarbonylphenyl)benzoate, (2-methoxycarbonylphenyl)-4-butoxybenzoate and (2'-methoxycarbonylphenyl)ester 4-(o-ethoxycarbonylphenyl)oxycarbonyl benzoate; (2'-ethoxycarbonylphenyl)esters of aromatic carboxylic acids such as (2-ethoxycarbonylphenyl)benzoate; and aliphatic carboxylic acid esters such as (2-methoxycarbonylphenyl)stearate and bis(2-methoxycarbonylphenyl)adipate.

A description is subsequently given of the first production process and the second production process of the present invention. It can be understood that the first production process and the second production process are preferred and included in the above production process.

The first production process of the present invention comprises the steps of (1) melt polycondensing a dihydroxy compound essentially composed of an aromatic dihydroxy compound represented by the above formula (2) and a carbonic acid diester in the presence of an ester exchange catalyst, and (2) adding (a) "the above specific phosphonium salt" or (b) a combination of "the above phosphonium salt" and at least one sulfonic acid derivative selected from the group consisting of sulfonic acid phosphonium salt, sulfonic acid ammonium salt, sulfonic acid lower alkyl ester and sulfonic acid while the obtained aromatic polycarbonate is molten.

As the ester exchange catalyst in the step (1) are used (i) at least one basic compound selected from the group consisting of basic nitrogen-containing compound and basic phosphorus-containing compound in an amount of $5 \times 10^{-5}$ to $1 \times 10^{1}$ chemical equivalent based on 1 mol of the dihydroxy compound and (ii) an alkali metal compound in an amount of $5 \times 10^{-8}$ to $1 \times 10^{-6}$ chemical equivalent based on 1 mol of the dihydroxy compound.

Examples of the basic nitrogen-containing compound and the basic phosphorus-containing compound are given hereinabove. To attain the object of the present invention more advantageously, a catalyst containing a metal compound selected from rubidium and cesium (may be referred to as "rubidium metal compound or the like" hereinafter) is preferably used as the alkali metal compound which is a component of the ester exchange catalyst.

The amount of the polymerization catalyst in the present invention is $1 \times 10^{-8}$ to $5 \times 10^{-6}$ chemical equivalent, preferably $2 \times 10^{-8}$ to $3 \times 10^{-6}$ chemical equivalent, more preferably $2 \times 10^{-8}$ to $2.5 \times 10^{-6}$ chemical equivalent as the total of the alkali metal and alkali earth metal compounds based on 1 mol of the aromatic dihydroxy compound. The rubidium metal compound or the like may be only a rubidium metal compound but preferably used in combination of other alkali metal compound or alkali earth metal compound. In this case, the chemical equivalent ratio of the amount of the rubidium metal compound to the total amount of the alkali metal and alkali earth metal compounds is 0.3 to more, preferably 0.4 or more, more preferably 0.5 or more, particularly preferably 0.7 or more.

The sulfonic acid derivative used in combination with the specific phosphonium salt in the step (2) is a sulfonic acid phosphonium salt, sulfonic acid ammonium salt, sulfonic acid lower alkyl ester or sulfonic acid. They may be used alone or in combination of two or more. Examples of these sulfonic acid derivatives are the same as those enumerated as the melt viscosity stabilizer used in combination with the specific phosphonium salt.

In the step (2), the specific phosphonium salt is added after the sulfonic acid derivative is added when the sulfonic acid derivative is used.

In the first production process of the present invention, the above steps (1) and (2) may be carried out in a melt polymerizer for the production of an aromatic polycarbonate, or the above step (1) may be carried out in a melt polycondensation apparatus and the step (2) may be carried out in a melt extruder. The later is preferred from an industrial point of view. The specific phosphonium salt (a) or a combination of the specific phosphonium salt and sulfonic acid derivative (b) may be added as a master batch for an aromatic polycarbonate containing the specific phosphonium (a) or a combination of the specific phosphonium salt and sulfonic acid derivative (b) in the step (2). Further, as for the addition of a combination of the specific phosphonium salt and sulfonic acid derivative (b), only the phosphonium salt may be added as a master batch for the aromatic polycarbonate.

A description is subsequently given of the second production process of the present invention.

The second production process of the present invention is carried out by (1) preparing a pellet of an aromatic polycarbonate essentially composed of the recurring unit represented by the above formula (1) and (2) melting the above pellet and adding and mixing the specific phosphonium salt in a molten state with the above molten pellet.

The pellet of the aromatic polycarbonate prepared in the step (1) is produced by the method described above and pelletized by a known method per se.

This aromatic polycarbonate preferably contains at least one sulfonic acid derivative selected from a sulfonic acid phosphonium salt, sulfonic acid ammonium salt, sulfonic acid lower alkyl ester and sulfonic acid. Specific examples and amounts of these compounds have already been described hereinabove.

In the second production process, the step (2) is preferably carried out in a melt extruder.

The aromatic polycarbonate composition of the present invention can be formed into a molded product having excellent durability and stability by a molding technique such as injection molding.

Since the aromatic polycarbonate composition of the present invention is excellent in the effect of retaining durability, especially long-term durability under extreme temperature and humidity conditions and antistatic properties, it can be formed into various molded products such as substrates for optical information recording media and sheets for various applications. For example, substrates for high-density optical disks typified by CD, CD-ROM, CD-R, CD-RW, magnetic optical disks (MO), digital versatile disks (such as DVD-ROM, DVD-Video, DVD-Audio, DVD-R and DVD-RAM) obtained from the composition have high reliability for a long time. Particularly, the aromatic polycarbonate composition of the present invention is useful for high-density optical disks such as digital versatile disks.

The sheets obtained from the aromatic polycarbonate composition of the present invention are excellent in flame retardancy, antistatic properties, adhesion and printability and widely used in electric parts, building material parts and auto parts thanks to the above characteristic properties. More specifically, they are used in grazing products forwindow materials, that is, window materials for general houses, gyms, baseball domes and vehicles (such as construction machinery, automobiles, buses, shinkansen trains and electric vehicles), side wall panels (such as sky domes, top lights, arcades, wainscots for condominiums and side panels on roads), window materials for vehicles, displays and touch panels for OA equipment, membrane switches, photo covers, polycarbonate resin laminate panels for water tanks, front panels and Fresnel lenses for projection TVs and plasma displays, and such optical application as optical cards, liquid crystal cells consisting of an optical disk and a polarizer, and phase difference compensators. The thickness of the sheet of the aromatic polycarbonate composition does not need to be particularly limited but it is generally 0.1 to 10 mm, preferably 0.2 to 8 mm, particularly preferably 0.2 to 3 mm. Various processing treatments for providing new functions (such as a laminate treatment for improving weatherability, a treatment for improving scratch resistance to improve a surface hardness, surface drawing and processing for making translucent or opaque) may be carried out on the sheet of the aromatic polycarbonate composition.

When additives are to be mixed with the aromatic polycarbonate composition of the present invention, any means is employed. For example, a tumbler, twin-cylinder mixer, super mixer, Nauter mixer, Banbury mixer, kneading roll or extruder is advantageously used to mix the aromatic polycarbonate composition. The thus obtained aromatic polycarbonate composition is formed into a sheet by melt extrusion directly or after it is pelletized by amelt extruder.

The aromatic polycarbonate composition of the present invention can be produced by mixing together the above components using any means such as a tumbler, twin-cylinder mixer, Nauter mixer, Banbury mixer, kneading roll or extruder.

The following examples are given to further illustrate the present invention.

Examples

1) intrinsic viscosity [η] of polycarbonate;

It was measured in methylene chloride at 20° C using an Ubbellohde viscometer. The viscosity-average molecular weight Mw was calculated from the intrinsic viscosity according to the following equation.

$$[\eta] = 1.23 \times 10^{-4}\ Mw^{0.83}$$

2) concentration of terminal group;

0.02 g of a sample was dissolved in 0.4 ml of chloroform deuteride to measure a terminal hydroxy group and the concentration thereof using $^1$H-NMR (EX-270 of JEOL LTD.) at 20°C.

3) melt viscosity stability;

The absolute value of a change in melt viscosity was measured at a shear rate of 1 rad./sec. at 300° C under a nitrogen stream using the RAA flow analyzer of Rheometrics Co., Ltd. for 30 minutes to obtain a change rate per minute.

This value should not exceed 0.5 % if the short-term and long-term stabilities of the polycarbonate resin composition are satisfactory.

Particularly when this value is larger than 0.5 %, the hydrolytic stability of the resin composition becomes poor. When this value is larger than 0.5 %, hydrolytic stability is evaluated as NG and when this value is equal to or smaller than 0.5 %, hydrolytic stability is evaluated as OK.

4) water content of composition;

100 g of a sample was accurately weighed, dried in a vacuum drier at 120°C and 3 Pa or less for 10 hours and then accurately weighed to obtain its water content from a reduction in weight.

5) heat stability at the time of molding; residence stability and formation of black foreign matter

This was measured right after the production of the composition and after 3 months of storage at room temperature.

i) residence stability

The color (color: L, a and b) of a color sample plate molded by an injection molding machine at a cylinder temperature of 380° C and a mold temperature of 80° C and the color (color: L', a', b') of a color sample plate obtained by molding after the sample was caused to stay in a cylinder at 380° C for 10 minutes were measured by a color difference meter (Z-1001DP color difference meter of Nippon Denshoku Co., Ltd.) to evaluate residence stability from ΔE expressed by the following equation.

$$\Delta E = [(L - L')^2 + (a - a')^2 + (b - b')^2]^{1/2}$$

The value ΔE is connected with the degree of reduction in molecular weight and greatly affects an organoleptic test on a molded product.

The residence stability is judged from the value ΔE as follows.
ΔE > 3.0; no good (NG), greatly deteriorating the color of a molded product and fair possibility to obtain a molded product having a strong yellow tint.
2.5 ≦ ΔE ≦ 3.0; accepted ○
2.0 ≦ ΔE < 2.5; good ○
2.0 < ΔE; excellent ◎

The smaller the value the higher the residence stability becomes. The ΔE value is more preferably 1.9 than 2.0 as a matter of course.

ii) black foreign matter

The total number of black foreign substances contained in 5 plates which were obtained by molding 100 mm x 100 mm x 2 mm plates by an injection molding machine at a cylinder temperature of 380° C and a mold temperature of 80° C and causing them to stay in a cylinder at 380° C for 10 minutes was visually counted and evaluated. The number of black foreign substances is an important factor for directly affecting the quality of a molded product. In the table, "many" means that the number of black foreign substances is 10 or more (not accepted), "medium" means that the number of black foreign substances is 6 to 9 (accepted) and "small" means that the number of black foreign substances is 0 to 5 (excellent).

Comparative Example 1 (production of PC-1)

The aromatic polycarbonate was produced as follows.

137 parts by weight of purified BPA and 133 parts by weight of purified DPC as raw materials, and $4.1 \times 10^{-5}$ parts by weight of bisphenol A 2 sodium salt (may be abbreviated as BPA2Na salt hereinafter) and $5.5 \times 10^{-3}$ parts by weight of tetramethylammonium hydroxide (may be abbreviated as TMAH hereinafter) as polymerization catalysts were charged into a reactor equipped with a stirrer, distillation column and decompressor and molten at 180° C under a nitrogen atmosphere.

Under agitation, a reaction was carried out for 20 minutes while the inside pressure of the reactor was reduced to 13.33 kPa (100 mmHg) and the formed phenol was distilled off. By gradually reducing the pressure after the temperature was raised to 200° C, the reaction was further continued at 4,000 kPa (30 mmHg) for 20 minutes while the phenol was distilled off. By gradually increasing the temperature, the reaction was further carried out at 220° C for 20 minutes, at 240° C for 20 minutes and at 260° C for 20 minutes. Thereafter, by gradually reducing the pressure at 260° C, the reaction was continued at 2.666 kPa (20 mmHg) for 10 minutes, at 1.333 kPa (10 mmHg) for 5 minutes and finally at 260°C and 66.7 Pa (0.5 mmHg) until the viscosity-average molecular weight reached 15,300. After polymerization, the polycarbonate was pelletized to obtain finally a polycarbonate having a viscosity-average molecular weight

of 15,300, a terminal hydroxy group concentration of 130 (eq/ton of polycarbonate) (to be abbreviated as eq/ton hereinafter), a phenoxy terminal group concentration of 109 (eq/ton) and a melt viscosity stability of 1.1 %. The physical property values of the obtained polycarbonate are shown in Table 2.

Comparative Example 2 (production of PC-2)

4.0 parts by weight of 2-methoxycarbonylphenyl phenyl carbonate (abbreviated as SAM hereinafter including tables) was added as a terminal capping agent when the viscosity average molecular weight became 15,300 in Comparative Example 1 and stirred at 260°C and 133.3 Pa (1 mmHg) for 10 minute and 3.6 x $10^{-4}$ part by weight of tetrabutylphosphonium dodecylbenzene sulfonate (abbreviated as DBSP hereinafter including tables) was added as a sulfonic acid derivative and stirred at 260°C and 66.7 Pa (0.5 mmHg) for 10 minutes. The obtained polycarbonate had a viscosity average molecular weight of 15,300, a terminal hydroxy group concentration of 46 (eq/ton), a phenoxy terminal group concentration of 193 (eq/ton) and a melt viscosity stability of 0 %. The physical property values of the obtained polycarbonate are shown in Table 2.

Examples 1 to 12 (production of PC-3 to 14)

A polymerization reaction was continued in the same manner as in Comparative Example 2 until the viscosity-average molecular weight became 15,300.

For the production of PC-3, 4 and 5, 4.1 x $10^{-5}$ parts by weight of BPA2Na salt and 5.5 x $10^{-3}$ parts by weight of TMAH were used under the same catalytic system as PC-2 and a specific phosphonium salt (B) shown in Table 1 was used in place of DBSP.

For PC-6, 7 and 8, polymerization was carried out in the same manner as PC-2, DBSP was added as a sulfonic acid derivative and then a specific phosphonium salt (B) shown in Table 1 was used.

For PC-9 and 10, polymerization was carried out in the same manner as PC-2 except that 3.48 x $10^{-5}$ parts by weight of sodium phenoxide (may be abbreviated as PhONa salt hereinafter) was used in place of 4.1 x $10^{-5}$ parts by weight of BPA2Na salt, and 1.66 x $10^{-2}$ part by weight of tetrabutylphosphonium hydroxide (may be abbreviated as TBPH hereinafter) was used in place of 5.5 x $10^{-3}$ parts by weight of TMAH, no sulfonic acid derivative was used and a specific phosphonium salt (B) shown in Table 1 was used.

For PC-11 and 12, polymerization was carried out in the same manner as PC-2 except that 1.2 x $10^{-5}$ parts by weight of sodium hydroxide (may be abbreviated as NaOH hereinafter) was used as a catalyst in place of 4.1 x $10^{-5}$ parts by weight of BPA2Na salt. When the viscosity-average molecular weight became 15,300, 4.0 parts by weight of 2-methoxycarbonylphenyl phenyl carbonate was added and stirred at 260°C and 133.3 Pa (1 mmHg) for 10 minutes, no sulfonic acid derivative was used thereafter, and a specific phosphonium salt (B) shown in the table was added in an amount 2 times the equivalent of Na of the ester exchange catalyst and stirred at 260°C and 66.7 Pa (0.5 mmHg) for 10 minutes. The obtained polycarbonate PC-11 had a viscosity-average molecular weight of 15,300, a terminal hydroxy group concentration of 49 (eq/ton), a phenoxy terminal group concentration of 190 (eq/ton) and a melt viscosity stability of 0 %, and the polycarbonate PC-12 had a viscosity-average molecular weight of 15,300, a terminal hydroxy group concentration of 47 (eq/ton), a phenoxy terminal group concentration of 192 (eq/ton) and a melt viscosity stability of 0 %.

For PC-13 and 14, polymerization was carried out using 1.85 x $10^{-5}$ parts by weight of rubidium hydroxide (may be abbreviated as RbOH hereinafter) and 2.7 x $10^{-5}$ parts by weight of cesium hydroxide (may be abbreviated as CsOH hereinafter) in place of 4.1 x $10^{-5}$ parts by weight of BPA2Na salt used for PC-2. When the viscosity average molecular weight became 15,300, 4.0 parts by weight of 2-methoxycarbonylphenyl phenyl carbonate was added and stirred at 260° C and 133.3 Pa (1 mmHg) for 10 minutes, and a sulfonic acid derivative and specific phosphonium salt (B) shown in the table were added in amounts 3.3 times the equivalent of Rb and Cs of the ester exchange catalysts and stirred at 260°C and 66.7 Pa (0.5 mmHg) for 10 minutes. The obtained polycarbonate PC-13 had a viscosity-average molecular weight of 15,300, a terminal hydroxy group concentration of 49 (eq/ton), a phenoxy terminal group concentration of 190 (eq/ton) and a melt viscosity stability of 0 % and the polycarbonate PC-14 had a viscosity-average molecular weight of 15,300, a terminal hydroxy group concentration of 47 (eq/ton), a phenoxy terminal group concentration of 192 (eq/ton) and a melt viscosity stability of 0 %.

Table 1

| Ex. | PC NO | catalyst | type of sulfonic acid | (B) type of specific phosphonium salt (parts by weight) | terminal capping agent |
|---|---|---|---|---|---|
| 1 | PC-3 | BPA2Na salt/TMAH | none | B-1($2.2\times10^{-4}$) | SAM |
| 2 | PC-4 | BPA2Na salt/TMAH | none | B-2($3.7\times10^{-4}$) | SAM |
| 3 | PC-5 | BPA2Na salt/TMAH | none | B-3($1.1\times10^{-4}$) | SAM |
| 4 | PC-6 | BPA2Na salt/TMAH | DBSP | B-2($7.4\times10^{-4}$) | SAM |
| 5 | PC-7 | BPA2Na salt/TMAH | DBSP | B-3($1.4\times10^{-4}$) | SAM |
| 6 | PC-8 | BPA2Na salt/TMAH | DBSP | B-7($3.2\times10^{-4}$) | SAM |
| 7 | PC-9 | PhONa salt/TBPH | none | B-6($2.1\times10^{-4}$) | SAM |
| 8 | PC-10 | PhONa salt/TBPH | none | B-7($3.6\times10^{-4}$) | SAM |
| 9 | PC-11 | NaOH/TMAH | none | B-10($3.5\times10^{-4}$) | SAM |
| 10 | PC-12 | NaOH/TMAH | none | B-11($1.9\times10^{-4}$) | SAM |
| 11 | PC-13 | RbOH/TMAH | DBSP | B-2($7.4\times10^{-4}$) | SAM |
| 12 | PC-14 | CsOH/TMAH | DBSP | B-3($1.4\times10^{-4}$) | SAM |

Ex.: Example

The physical property values of the polycarbonates of Examples 4, 5, 6, 11 and 12 are shown in Table 2.

Examples 13 to 15 (production of PC-15 to 17); examples of interfacial polymerization

502.8 g (2.21 mols) of purified bisphenol A, 2.21 liters of a 7.2 % aqueous solution of sodium hydroxide (4.19 mols of sodium hydroxide) and 0.98 g (0.0056 mol) of sodium hydrosulfite were charged into a 5-liter reactor equipped with a phosgene blowing tube, thermometer and stirrer and dissolved, 1.27 liters of methylene chloride and 80.70 g of a 48.5 % aqueous solution of sodium hydroxide (0.98 mol of sodium hydroxide) were added under agitation, and 250.80 g (0.253 mol) of phosgene was added over 180 minutes at 25°C to carry out a phosgenation reaction.

After the end of phosgenation, 17.51 g (0.117 mol) of p-tert-butylphenol, 80.40 g of a 48.5 % aqueous solution of sodium hydroxide (0.97 mol of sodium hydroxide) and 1.81 ml (0.013 mol) of triethylamine as a catalyst were added, maintained at 33° C and stirred for 2 hours to terminate the reaction. A methylene chloride layer was separated from the reaction mixed solution which was then purified by washing in water 5 times to obtain a polycarbonate resin (PC-15) having a viscosity average molecular weight of 15,300, a terminal hydroxy group concentration of 15 (eq/ton), a terminal phenoxy group concentration of 224 (eq/ton) and a melt viscosity stability of 0.1%. In Examples 14 and 15, after washing in water, 8 x $10^{-4}$ g (1.45 ppm in polycarbonate) of B-1 and 13.2 x $10^{-4}$ g (2.43 ppm in polycarbonate) of B-2 as phosphonium salts (B) were added. As a result, the obtained polycarbonate resin PC-16 had a viscosity average molecular weight of 15,300, a terminal hydroxy group concentration of 16 (eq/ton), a terminal phenoxy group concentration of 223 (eq/ton) and a melt viscosity stability of 0 %. The obtained polycarbonate resin PC-17 had a viscosity average molecular weight of 15,300, a terminal hydroxy group concentration of 14 (eq/ton), a terminal phenoxy group concentration of 225 (eq/ton) and a melt viscosity stability of 0 %.

Examples 16 to 19 (production of PC-18 to 21)

Polymerization was carried out in the same manner as in Comparative Example 1 until the viscosity-average molecular weight became 22,500. At this point, the obtained polycarbonate had a terminal hydroxy group concentration of 73, a terminal phenoxy group concentration of 77 (eq/ton-polycarbonate) and a melt viscosity stability of 1.0 % (PC-18).

Thereafter, the obtained polycarbonate was treated in the same manner as in Comparative Example 2 and 1.95 parts by weight of SAM and 3.6 x $10^{-4}$ parts by weight of DBSP as a sulfonic acid were added. The finally obtained polycarbonate had a viscosity average molecular weight of 22,500, a terminal hydroxy group concentration of 37 (eq/ton), a terminal phenoxy group concentration of 113 (eq/ton-polycarbonate) and a melt viscosity stability of 0 % (PC-19).

For PC-20 and 21, no sulfonic acid derivative was used and 2.2 x $10^{-4}$ parts by weight of specific phosphonium salt B-1 and 3.7 x $10^{-4}$ parts by weight of specific phosphonium salt B-2 were used, respectively. The finally obtained polycarbonate PC-20 had a viscosity-average molecular weight of 22,500, a terminal OH group concentration of 38 (eq/ton), a terminal phenoxy group concentration of 112 (eq/ton) and a melt viscosity stability of 0 % (PC-20). The polycarbonate PC-21 had a viscosity-average molecular weight of 22,500, a terminal OH group concentration of 36 (eq/ton), a terminal phenoxy group concentration of 114 (eq/ton) and a melt viscosity stability of 0 % (PC-21).

Examples 20 to 52 and Comparative Examples 3 to 11 (preparation of polycarbonate composition pellets)

A specific phosphonium salt (B), ester of a polyhydric alcohol and a higher fatty acid (E), organic bluing agent (F), phosphite (G) and phenol-based antioxidant (H) shown in Tables 2 to 11 were added to and kneaded with the respective aromatic polycarbonate pellets of the above Comparative Examples and Examples in amounts shown in Tables 2 to 11.

The obtained composition was melt kneaded, extruded and pelletized at a cylinder temperature of 240°C by a vented twin-screw extruder [KTX-46 of Kobe Steel Co., Ltd.] under deaeration. The evaluation result of the stability of the composition are shown in Tables 2 to 11. In Examples 41 to 44, master batches were prepared by melt kneading a specific phosphonium salt with an aromatic polycarbonate and DBSP with an aromatic polycarbonate independently. The master batche containing both of the specific phosphonium salt and the DBSP were used in Examples 41 and 42 and the master batch containing the specific phosphonium salt was added to and kneaded with the aromatic polycarbonate, melt kneaded by the above vented double-screw extruder, extruded and pelletized in Examples 43 and 44.

Table 2

| | experiment No. | C.Ex.1 | Ex.1 | C.Ex.2 | Ex.4 | Ex.5 | Ex.6 | Ex.11 | Ex.12 |
|---|---|---|---|---|---|---|---|---|---|
| (A) aromatic polycarbonate | PC-No | PC-1 | PC-3 | PC-2 | PC-6 | PC-7 | PC-8 | PC-13 | PC-14 |
| | viscosity-average molecular weight | 15300 | 15300 | 15300 | 15300 | 15300 | 15300 | 15300 | 15300 |
| catalyst | nitrogen-containing or phosphorus-containing basic compound; type | TMAH | TMAH | TMAH | TMAH | TMAH | TMAH | TMAH | TMAH |
| | quantity (μ chemical equivalent/1 mol-BPA) | 100 | 100 | 100 | 100 | 100 | 100 | 100 | 100 |
| | alkali metal compound; type | BPA2Na salt | BPA2Na salt | BPA2Na salt | BPA2Na salt | BPA2Na salt | BPA2Na salt | RbOH | CsOH |
| | quantity (μ chemical equivalent/1 mol-BPA) | 0.5 | 0.5 | 0.5 | 0.5 | 0.5 | 0.5 | 0.3 | 0.3 |
| (B) specific phosphonium salt | type | none | B-1(*) | none | B-2(*) | B-3(*) | B-7(*) | B-2(*) | B-3(*) |
| | quantity (μmol/1 mol-BPA) | | 1 | | 2 | 2 | 2 | 1 | 1 |
| | quantity (ppm-PC) | | 1.45 | | 4.9 | 1.4 | 4.7 | 2.43 | 0.72 |
| sulfonic acid derivative | type | none | | DBSP(*) | DBSP(*) | DBSP(*) | DBSP(*) | DBSP(*) | DBSP(*) |
| | quantity (μmol/1 mol-BPA) | 0 | | 1 | 1 | 1 | 1 | 1 | 1 |
| | quantity (ppm-PC) | | | | | | | | |
| | melt viscosity stability (%) | 1.1 | 0 | 0 | 0 | 0 | 0 | 0 | 0 |
| terminal capping agent | type of salicylate | none | SAM(*) | SAM(*) | SAM(*) | SAM(*) | SAM(*) | SAM(*) | SAM(*) |
| | terminal hydroxy group concentration;(mol %) | 54 | 20 | 19 | 20 | 20 | 20 | 19 | 20 |
| results: right after production of composition | residence stability ΔE | 3.1 | 2.3 | 2.4 | 1.4 | 1.4 | 1.4 | 1.3 | 1.3 |
| | number of black foreign substances | many | small | small | small | small | small | small | small |
| results: after 3 months | residence stability ΔE | 3.5 | 2.7 | 3 | 1.6 | 1.6 | 1.6 | 1.4 | 1.4 |
| | number of black foreign substances | many | small | medium | small | small | small | small | small |

Ex.: Example C.Ex.: Comparative Example
(*): added and mixed in a reactor at the time of melting right after melt polymerization

Table 3

| | experiment No. | Ex.20 | Ex.21 | Ex.22 |
|---|---|---|---|---|
| (A) aromatic polycarbonate | PC-No | PC-8 | PC-8 | PC-8 |
| | viscosity-average molecular weight | 15300 | 15300 | 15300 |
| catalyst | nitrogen-containing or phosphorus-containing basic compound; type | TMAH | TMAH | TMAH |
| | quantity (μ chemical equivalent/1 mol-BPA) | 100 | 100 | 100 |
| | alkali metal compound; type | BPA2Na salt | BPA2Na salt | BPA2Na salt |
| | quantity (μ chemical equivalent/1 mol-BPA) | 0.5 | 0.5 | 0.5 |
| (B) specific phosphonium salt | type | B-7(*) | B-7(*) | B-7(*) |
| | quantity (μmol/1 mol-BPA) | 2 | 2 | 2 |
| | quantity (ppm-PC) | 4.7 | 4.7 | 4.7 |
| sulfonic acid derivative | type | DBSP(*) | DBSP(*) | DBSP(*) |
| | quantity (μmol/1 mol-BPA) | 1 | 1 | 1 |
| | quantity (ppm-PC) | | | |
| | melt viscosity stability (%) | 0 | 0 | 0 |
| terminal capping agent | type of salicylate | SAM(*) | SAM(*) | SAM(*) |
| | terminal hydroxy group concentration;(mol %) | 20 | 20 | 20 |
| (C) radical scavenger | type | C-1(#) | | C-2(#) |
| | concentration;(ppm) | 100 | | 100 |
| (D) phosphoric acid-based compounds | type | | D-1(#) | D-4(#) |
| | concentration;(ppm) | | 10 | 10 |
| results: right after production of composition | residence stability ΔE | 1.4 | 1.3 | 1.3 |
| | number of black foreign substances | small | small | small |
| results: after 3 months | residence stability ΔE | 1.5 | 1.6 | 1.5 |
| | number of black foreign substances | small | small | small |

Ex.: Example C.Ex.: Comparative Example
(*): added and mixed in a reactor at the time of melting right after melt polymerization
(#): added and mixed using double-screw extruder

Table 4

| | experiment No. | C.Ex.3 | C.Ex.4 | Ex.23 | Ex.24 |
|---|---|---|---|---|---|
| (A) aromatic polycarbonate | PC-No | PC-1 | PC-2 | PC-3 | PC-5 |
| | viscosity-average molecular weight | 15300 | 15300 | 15300 | 15300 |
| catalyst | nitrogen-containing or phosphorus-containing basic compound; type | TMAH | TMAH | TMAH | TMAH |
| | quantity (μ chemical equivalent/1 mol-BPA) | 100 | 100 | 100 | 100 |
| | alkali metal compound; type | BPA2Na salt | BPA2Na salt | BPA2Na salt | BPA2Na salt |
| | quantity (μ chemical equivalent/1 mol-BPA) | 0.5 | 0.5 | 0.5 | 0.5 |
| (B) specific phosphonium salt | type | none | none | B-1(*) | B-3(*) |
| | quantity (μmol/1 mol-BPA) | | | 1 | 1 |
| | quantity (ppm-PC) | | | 1.45 | 0.72 |
| sulfonic acid derivative | type | none | DBSP(*) | none | none |
| | quantity (μmol/1 mol-BPA) | 0 | 1 | 0 | 0 |
| | quantity (ppm-PC) | | | | |
| | melt viscosity stability (%) | 1.1 | 0 | 0 | 0 |
| terminal capping agent | type of salicylate | none | SAM(*) | SAM(*) | SAM(*) |
| | terminal hydroxy group concentration; (mol %) | 54 | 19 | 20 | 20 |
| (E) ester of polyhydric alcohol and higher fatty acid | type | E-3(#) | E-3(#) | E-3(#) | E-4(#) |
| | concentration; (ppm) | 200 | 200 | 200 | 200 |
| | HLB | 4.3 | 4.3 | 4.3 | 4.3 |
| (G) phosphite | type | G-2(#) | G-2(#) | G-2(#) | G-2(#) |
| | concentration; (ppm) | 30 | 30 | 30 | 30 |
| (H) phenol-based antioxidant | type | | | | |
| | concentration; (ppm) | | | | |
| results: right after production of composition | residence stability ΔE | 3.5 | 2.6 | 2.2 | 1.9 |
| | number of black foreign substances | many | small | small | small |
| results: after 3 months | residence stability ΔE | 4.1 | 3.2 | 2.6 | 1.9 |
| | number of black foreign substances | many | medium | small | small |

Ex.: Example C.Ex.: Comparative Example

(*): added and mixed in a reactor at the time of melting right after melt polymerization

(#): added and mixed using double-screw extruder

Table 5

| | experiment No. | Ex.25 | Ex.26 | Ex.27 | Ex.28 |
|---|---|---|---|---|---|
| (A) aromatic polycarbonate | PC-No | PC-4 | PC-5 | PC-9 | PC-10 |
| | viscosity-average molecular weight | 15300 | 15300 | 15300 | 15300 |
| catalyst | nitrogen-containing or phosphorus-containing basic compound; type | TMAH | TMAH | TBPH | TBPH |
| | quantity (μ chemical equivalent/1 mol-BPA) | 100 | 100 | 100 | 100 |
| | alkali metal compound; type | BPA2Na salt | BPA2Na salt | PhONa salt | PhONa salt |
| | quantity (μ chemical equivalent/1 mol-BPA) | 0.5 | 0.5 | 0.5 | 0.5 |
| (B) specific phosphonium salt | type | B-2(*) | B-3(*) | B-6(*) | B-7(*) |
| | quantity (μmol/1 mol-BPA) | 1 | 1 | 1 | 1 |
| | quantity (ppm-PC) | 2.43 | 0.72 | 1.38 | 2.37 |
| sulfonic acid derivative | type | none | none | none | none |
| | quantity (μmol/1 mol-BPA) | 0 | 0 | 0 | 0 |
| | quantity (ppm-PC) | | | | |
| | melt viscosity stability (%) | 0 | 0 | 0 | 0 |
| terminal capping agent | type of salicylate | SAM(*) | SAM(*) | SAM(*) | SAM(*) |
| | terminal hydroxy group concentration;(mol %) | 20 | 20 | 20 | 20 |
| (E) ester of polyhydric alcohol and higher fatty acid | type | E-3(#) | E-3(#) | E-2(#) | E-2(#) |
| | concentration; (ppm) | 200 | 200 | 200 | 200 |
| | HLB | 4.3 | 4.3 | 4.6 | 4.6 |
| (G) phosphite | type | G-3(#) | G-3(#) | G-2(#) | G-2(#) |
| | concentration; (ppm) | 30 | 30 | 30 | 30 |
| (H) phenol-based antioxidant | type | H-1(#) | H-1(#) | H-1(#) | H-1(#) |
| | concentration; (ppm) | 100 | 100 | 100 | 100 |
| results: right after production of composition | residence stability ΔE | 1.9 | 1.9 | 1.9 | 1.9 |
| | number of black foreign substances | small | small | small | small |
| results: after 3 months | residence stability ΔE | 2 | 2 | 2 | 2 |
| | number of black foreign substances | small | small | small | small |

Ex.: Example C.Ex.: Comparative Example
(*): added and mixed in a reactor at the time of melting right after melt polymerization
(#): added and mixed using double-screw extruder

Table 6

| | experiment No. | Ex.29 | Ex.30 | Ex.31 | Ex.32 |
|---|---|---|---|---|---|
| (A) aromatic polycarbonate | PC-No | PC-11 | PC-12 | PC-13 | PC-13 |
| | viscosity-average molecular weight | 15300 | 15300 | 15300 | 15300 |
| catalyst | nitrogen-containing or phosphorus-containing basic compound; type | TMAH | TMAH | TMAH | TMAH |
| | quantity (μ chemical equivalent/1 mol-BPA) | 100 | 100 | 100 | 100 |
| | alkali metal compound; type | NaOH | NaOH | RbOH | RbOH |
| | quantity (μ chemical equivalent/1 mol-BPA) | 0.5 | 0.5 | 0.3 | 0.3 |
| (B) specific phosphonium salt | type | B-10(*) | B-11(*) | B-2(*) | B-2(*) |
| | quantity (μmol/1 mol-BPA) | 1 | 1 | 1 | 1 |
| | quantity (ppm-PC) | 2.36 | 1.25 | 2.43 | 2.43 |
| sulfonic acid derivative | type | none | none | DBSP(*) | DBSP(*) |
| | quantity (μmol/1 mol-BPA) | 0 | 0 | 1 | 1 |
| | quantity (ppm-PC) | | | | |
| | melt viscosity stability (%) | 0 | 0 | 0 | 0 |
| terminal capping agent | type of salicylate | SAM(*) | SAM(*) | SAM(*) | SAM(*) |
| | terminal hydroxy group concentration;(mol %) | 21 | 20 | 21 | 21 |
| (E) ester of polyhydric alcohol and higher fatty acid | type | E-7(#) | E-7(#) | E-4(#) | E-4(#) |
| | concentration; (ppm) | 200 | 200 | 300 | 300 |
| | HLB | | | 4.3 | 4.3 |
| (G) phosphite | type | G-4(#) | G-4(#) | G-3(#) | G-3(#) |
| | concentration; (ppm) | 50 | 50 | 30 | 30 |
| (H) phenol-based antioxidant | type | H-1(#) | H-1(#) | | H-1(#) |
| | concentration; (ppm) | 100 | 100 | | 100 |
| results: right after production of composition | residence stability ΔE | 1.8 | 1.8 | 1.8 | 1.8 |
| | number of black foreign substances | small | small | small | small |
| results: after 3 months | residence stability ΔE | 2.1 | 2 | 1.8 | 1.8 |
| | number of black foreign substances | small | small | small | small |

Ex.: Example C.Ex.: Comparative Example
(*): added and mixed in a reactor at the time of melting right after melt polymerization
(#): added and mixed using double-screw extruder

Table 6

| | experiment No. | Ex.29 | Ex.30 | Ex.31 | Ex.32 |
|---|---|---|---|---|---|
| (A) aromatic polycarbonate | PC-No | PC-11 | PC-12 | PC-13 | PC-13 |
| | viscosity-average molecular weight | 15300 | 15300 | 15300 | 15300 |
| catalyst | nitrogen-containing or phosphorus-containing basic compound; type | TMAH | TMAH | TMAH | TMAH |
| | quantity (μ chemical equivalent/1 mol-BPA) | 100 | 100 | 100 | 100 |
| | alkali metal compound; type | NaOH | NaOH | RbOH | RbOH |
| | quantity (μ chemical equivalent/1 mol-BPA) | 0.5 | 0.5 | 0.3 | 0.3 |
| (B) specific phosphonium salt | type | B-10(*) | B-11(*) | B-2(*) | B-2(*) |
| | quantity (μmol/1 mol-BPA) | 1 | 1 | 1 | 1 |
| | quantity (ppm-PC) | 2.36 | 1.25 | 2.43 | 2.43 |
| sulfonic acid derivative | type | none | none | DBSP(*) | DBSP(*) |
| | quantity (μmol/1 mol-BPA) | 0 | 0 | 1 | 1 |
| | quantity (ppm-PC) | | | | |
| | melt viscosity stability (%) | 0 | 0 | 0 | 0 |
| terminal capping agent | type of salicylate | SAM(*) | SAM(*) | SAM(*) | SAM(*) |
| | terminal hydroxy group concentration;(mol %) | 21 | 20 | 21 | 21 |
| (E) ester of polyhydric alcohol and higher fatty acid | type | E-7(#) | E-7(#) | E-4(#) | E-4(#) |
| | concentration; (ppm) | 200 | 200 | 300 | 300 |
| | HLB | | | 4.3 | 4.3 |
| (G) phosphite | type | G-4(#) | G-4(#) | G-3(#) | G-3(#) |
| | concentration; (ppm) | 50 | 50 | 30 | 30 |
| (H) phenol-based antioxidant | type | H-1(#) | H-1(#) | | H-1(#) |
| | concentration; (ppm) | 100 | 100 | | 100 |
| results: right after production of composition | residence stability ΔE | 1.8 | 1.8 | 1.8 | 1.8 |
| | number of black foreign substances | small | small | small | small |
| results: after 3 months | residence stability ΔE | 2.1 | 2 | 1.8 | 1.8 |
| | number of black foreign substances | small | small | small | small |

Ex.: Example C.Ex.: Comparative Example
(*): added and mixed in a reactor at the time of melting right after melt polymerization
(#): added and mixed using double-screw extruder

Table 7

| | experiment No. | Ex.33 | Ex.34 | Ex.35 | Ex.36 |
|---|---|---|---|---|---|
| (A) aromatic polycarbonate | PC-No | PC-14 | PC-14 | PC-4 | PC-4 |
| | viscosity-average molecular weight | 15300 | 15300 | 15300 | 15300 |
| catalyst | nitrogen-containing or phosphorus-containing basic compound; type | TMAH | TMAH | TMAH | TMAH |
| | quantity (μ chemical equivalent/1 mol-BPA) | 100 | 100 | 100 | 100 |
| | alkali metal compound; type | CsOH | CsOH | BPA2Na salt | BPA2Na salt |
| | quantity (μ chemical equivalent/1 mol-BPA) | 0.3 | 0.3 | 0.5 | 0.5 |
| (B) specific phosphonium salt | type | B-3(*) | B-3(*) | B-2(*) | B-2(*) |
| | quantity (μmol/1 mol-BPA) | 1 | 1 | 1 | 1 |
| | quantity (ppm-PC) | 0.72 | 0.72 | 2.43 | 2.43 |
| sulfonic acid derivative | type | DBSP(*) | DBSP(*) | none | none |
| | quantity (μmol/1 mol-BPA) | 1 | 1 | 0 | 0 |
| | quantity (ppm-PC) | | | | |
| | melt viscosity stability (%) | 0 | 0 | 0 | 0 |
| terminal capping agent | type of salicylate | SAM(*) | SAM(*) | SAM(*) | SAM(*) |
| | terminal hydroxy group concentration;(mol %) | 20 | 20 | 20 | 20 |
| (E) ester of polyhydric alcohol and higher fatty acid | type | E-4(#) | E-4(#) | E-10(#) | E-11(#) |
| | concentration; (ppm) | 300 | 300 | 200 | 200 |
| | HLB | 4.3 | 4.3 | 1.9 | 8.6 |
| (G) phosphite | type | G-3(#) | G-3(#) | G-3(#) | G-3(#) |
| | concentration; (ppm) | 30 | 30 | 30 | 30 |
| (H) phenol-based antioxidant | type | | H-1(#) | H-1(#) | H-1(#) |
| | concentration; (ppm) | | 100 | 100 | 100 |
| results: right after production of composition | residence stability ΔE | 1.8 | 1.8 | 2 | 2.2 |
| | number of black foreign substances | small | small | small | small |
| results: after 3 months | residence stability ΔE | 1.8 | 1.8 | 2.1 | 2.3 |
| | number of black foreign substances | small | small | small | small |

Ex.: Example C.Ex.: Comparative Example
(*): added and mixed in a reactor at the time of melting right after melt polymerization
(#): added and mixed using double-screw extruder

Table 8

| | experiment No. | C.Ex.5 | Ex.37 | Ex.38 | C.Ex.6 | C.Ex.7 | Ex.39 | Ex.40 |
|---|---|---|---|---|---|---|---|---|
| (A) aromatic polycarbonate | PC-No | PC-15 | PC-16 | PC-17 | PC-18 | PC-19 | PC-20 | PC-21 |
| | viscosity-average molecular weight | 15300 | 15300 | 15300 | 22500 | 22500 | 22500 | 22500 |
| catalyst | nitrogen-containing or phosphorus-containing basic compound; type | none | none | none | TMAH | TMAH | TMAH | TMAH |
| | quantity (μ chemical equivalent/1 mol-BPA) | | | | 100 | 100 | 100 | 100 |
| | alkali metal compound; type | | | | BPA2Na salt | BPA2Na salt | BPA2Na salt | BPA2Na salt |
| | quantity (μ chemical equivalent/1 mol-BPA) | | | | 0.5 | 0.5 | 0.5 | 0.5 |
| (B) specific phosphonium salt | type | none | B-1(*) | B-2(*) | none | none | B-1(*) | B-2(*) |
| | quantity (μmol/1 mol-BPA) | | 1 | 2 | | | 1 | 1 |
| | quantity (ppm-PC) | | 1.45 | 2.43 | | | 1.44 | 2.43 |
| sulfonic acid derivative | type | none | none | none | none | DBSP(*) | none | none |
| | quantity (μmol/1 mol-BPA) | 0 | 0 | 0 | 0 | 1 | 0 | 0 |
| | quantity (ppm-PC) | | | | | | | |
| | melt viscosity stability (%) | 0 | 0 | 0 | 1 | 0 | 0 | 0 |
| terminal capping agent | type of salicylate | none | none | none | none | SAM(*) | SAM(*) | SAM(*) |
| | terminal hydroxy group concentration; (mol %) | 6 | 7 | 6 | 49 | 25 | 25 | 24 |

Ex.: Example C.Ex.: Comparative Example

(*): added and mixed in a reactor at the time of melting right after melt polymerization

(#): added and mixed using double-screw extruder

Table 8 (continued)

| | experiment No. | C.Ex.5 | Ex.37 | Ex.38 | C.Ex.6 | C.Ex.7 | Ex.39 | Ex.40 |
|---|---|---|---|---|---|---|---|---|
| (E) ester of polyhydric alcohol and higher fatty acid | type | E-7(#) | E-7(#) | E-7(#) | E-3(#) | E-3(#) | E-3(#) | E-3(#) |
| | concentration; (ppm) | 200 | 200 | 200 | 700 | 700 | 700 | 700 |
| | HLB | | | | 4.3 | 4.3 | 4.3 | 4.3 |
| (G) phosphite | type | G-4(#) | G-4(#) | G-4(#) | G-4(#) | G-4(#) | G-4(#) | G-4(#) |
| | concentration; (ppm) | 50 | 50 | 50 | 100 | 100 | 100 | 100 |
| (H) phenol-based antioxidant | type | | | | H-1(#) | H-1(#) | H-1(#) | H-1(#) |
| | concentration; (ppm) | | | | 100 | 100 | 100 | 100 |
| (F) *organic* bluing agent | type | | | | V-1(#) | V-1(#) | V-1(#) | V-1(#) |
| | concentration; (ppm) | | | | 0.8 | 0.8 | 0.8 | 0.8 |
| results: right after production of composition | residence stability ΔE | 2.6 | 2.3 | 1.9 | 3.3 | 2.5 | 1.8 | 1.7 |
| | number of black foreign substances | small | small | small | many | small | small | small |
| results: after 3 months | residence stability ΔE | 3.1 | 2.5 | 1.9 | 4.1 | 3.2 | 2 | 1.9 |
| | number of black foreign substances | many | small | small | many | many | small | small |

Ex.: Example C.Ex.: Comparative Example

(*): added and mixed in a reactor at the time of melting right after melt polymerization

(#): added and mixed using double-screw extruder

Table 9

| | experiment No. | C.Ex.8 | Ex.41 | Ex.42 |
|---|---|---|---|---|
| (A) aromatic polycarbonate | PC-No | PC-1 | PC-1 | PC-1 |
| | viscosity-average molecular weight | 15300 | 15300 | 15300 |
| catalyst | nitrogen-containing or phosphorus-containing basic compound; type | TMAH | TMAH | TMAH |
| | quantity (µ chemical equivalent/1 mol-BPA) | 100 | 100 | 100 |
| | alkali metal compound; type | BPA2Na salt | BPA2Na salt | BPA2Na salt |
| | quantity (µ chemical equivalent/1 mol-BPA) | 0.5 | 0.5 | 0.5 |
| (B) specific phosphonium salt | type | none | M-4(B-3)(#) | M-3(B-12)(#) |
| | quantity (µmol/1 mol-BPA) | | | |
| | quantity (ppm-PC) | | 10 | 10 |
| sulfonic acid derivative | type | none | M-2(DBSP)(#) | M-1(DBSP)(#) |
| | quantity (µmol/1 mol-BPA) | 0 | 1 | 1 |
| | quantity (ppm-PC) | | 2.3 | 2.3 |
| | melt viscosity stability (%) | 1.1 | 0 | 0 |
| terminal capping agent | type of salicylate | none | | |
| | terminal hydroxy group concentration;(mol %) | 54 | | |
| (E) ester of polyhydric alcohol and higher fatty acid | type | E-4(#) | E-4(#) | E-4(#) |
| | concentration; (ppm) | 100 | 100 | 100 |
| (G) phosphite | type | G-1(#) | G-1(#) | G-1(#) |
| | concentration; (ppm) | 30 | 30 | 30 |
| results: right after production of composition | residence stability ΔE | 3.5 | 2.2 | 2.2 |
| | number of black foreign substances | many | small | small |
| results: after 3 months | residence stability ΔE | 4.1 | 2.3 | 2.3 |
| | number of black foreign substances | many | small | small |

Ex.: Example C.Ex.: Comparative Example
M-1 to M-4 in the table show the addition of master batch.
(*): added and mixed in a reactor at the time of melting right after melt polymerization
(#): added and mixed using double-screw extruder

Table 9 (continued)

| | experiment No. | C.Ex.9 | Ex.43 | Ex.44 |
|---|---|---|---|---|
| (A) aromatic polycarbonate | PC-No | PC-2 | PC-2 | PC-2 |
| | viscosity-average molecular weight | 15300 | 15300 | 15300 |
| catalyst | nitrogen-containing or phosphorus-containing basic compound; type | TMAH | TMAH | TMAH |
| | quantity (μ chemical equivalent/1 mol-BPA) | 100 | 100 | 100 |
| | alkali metal compound; type | BPA2Na salt | BPA2Na salt | BPA2Na salt |
| | quantity (μ chemical equivalent/1 mol-BPA) | 0.5 | 0.5 | 0.5 |
| (B) specific phosphonium salt | type | none | M-4(B-3)(#) | M-3(B-12)(#) |
| | quantity (μmol/1 mol-BPA) | | | |
| | quantity (ppm-PC) | | 10 | 10 |
| sulfonic acid derivative | type | DBSP(*) | DBSP(*) | DBSP(*) |
| | quantity (μmol/1 mol-BPA) | | | |
| | quantity (ppm-PC) | 1 | 1 | 1 |
| | melt viscosity stability (%) | 0 | 0 | 0 |
| terminal capping agent | type of salicylate | SAM(*) | SAM(*) | SAM(*) |
| | terminal hydroxy group concentration;(mol %) | 19 | 19 | 19 |
| (E) ester of polyhydric alcohol and higher fatty acid | type | E-4(#) | E-4(#) | E-4(#) |
| | concentration; (ppm) | 100 | 100 | 100 |
| (G) phosphite | type | G-1(#) | G-1(#) | G-1(#) |
| | concentration; (ppm) | 30 | 30 | 30 |
| results: right after production of composition | residence stability ΔE | 2.6 | 2 | 2 |
| | number of black foreign substances | small | small | small |
| results: after 3 months | residence stability ΔE | 3.1 | 2.1 | 2.1 |
| | number of black foreign substances | many | small | small |

Ex.: Example C.Ex.: Comparative Example
M-1 to M-4 in the table show the addition of master batch.
(*): added and mixed in a reactor at the time of melting right after melt polymerization
(#): added and mixed using double-screw extruder

Table 10

| | experiment No. | Ex.45 | Ex.46 | Ex.47 |
|---|---|---|---|---|
| (A) aromatic polycarbonate | PC-No | PC-2 | PC-2 | PC-2 |
| | viscosity-average molecular weight | 15300 | 15300 | 15300 |
| catalyst | nitrogen-containing or phosphorus-containing basic compound; type | TMAH | TMAH | TMAH |
| | quantity (μ chemical equivalent/1 mol-BPA) | 100 | 100 | 100 |
| | alkali metal compound; type | BPA2Na salt | BPA2Na salt | BPA2Na salt |
| | quantity (μ chemical equivalent/1 mol-BPA) | 0.5 | 0.5 | 0.5 |
| (B) specific phosphonium salt | type | B-12(#) | B-3(#) | B-7(#) |
| | quantity (μmol/1 mol-BPA) | | | |
| | quantity (ppm-PC) | 10ppm | 10ppm | 10ppm |
| sulfonic acid derivative | type | DBSP(*) | DBSP(*) | DBSP(*) |
| | quantity (μmol/1 mol-BPA) | | | |
| | quantity (ppm-PC) | 1 | 1 | 1 |
| | melt viscosity stability (%) | 0 | 0 | 0 |
| terminal capping agent | type of salicylate | SAM(*) | SAM(*) | SAM(*) |
| | terminal hydroxy group concentration;(mol %) | 19 | 19 | 19 |
| (E) ester of polyhydric alcohol and higher fatty acid | type | E-4(#) | E-4(#) | E-4(#) |
| | concentration; (ppm) | 100 | 100 | 100 |
| (G) phosphite | type | G-1(#) | G-1(#) | G-1(#) |
| | concentration; (ppm) | 30 | 30 | 30 |
| (H) phenol-based antioxidant | type | | | |
| | concentration; (ppm) | | | |
| results: right after production of composition | residence stability ΔE | 1.9 | 1.9 | 1.9 |
| | number of black foreign substances | small | small | small |
| results: after 3 months | residence stability ΔE | 2 | 2 | 2.1 |
| | number of black foreign substances | small | small | small |

Ex.: Example C.Ex.: Comparative Example
(*): added and mixed in a reactor at the time of melting right after melt polymerization
(#): added and mixed using double-screw extruder

Table 10 (continued)

| | experiment No. | Ex.48 | Ex.49 |
|---|---|---|---|
| (A) aromatic polycarbonate | PC-No | PC-2 | PC-2 |
| | viscosity-average molecular weight | 15300 | 15300 |
| catalyst | nitrogen-containing or phosphorus-containing basic compound; type | TMAH | TMAH |
| | quantity (μ chemical equivalent/1 mol-BPA) | 100 | 100 |
| | alkali metal compound; type | BPA2Na salt | BPA2Na salt |
| | quantity (μ chemical equivalent/1 mol-BPA) | 0.5 | 0.5 |
| (B) specific phosphonium salt | type | B-7(#) | B-11(#) |
| | quantity (μmol/1 mol-BPA) | | |
| | quantity (ppm-PC) | 10ppm | 10ppm |
| sulfonic acid derivative | type | DBSP(*) | DBSP(*) |
| | quantity (μmol/1 mol-BPA) | | |
| | quantity (ppm-PC) | 1 | 1 |
| | melt viscosity stability (%) | 0 | 0 |
| terminal capping agent | type of salicylate | SAM(*) | SAM(*) |
| | terminal hydroxy group concentration;(mol %) | 19 | 19 |
| (E) ester of polyhydric alcohol and higher fatty acid | type | E-4(#) | E-4(#) |
| | concentration; (ppm) | 100 | 100 |
| (G) phosphite | type | G-1(#) | G-4(#) |
| | concentration; (ppm) | 30 | 30 |
| (H) phenol-based antioxidant | type | H-1(#) | H-1(#) |
| | concentration; (ppm) | 100 | 100 |
| results: right after production of composition | residence stability ΔE | 1.8 | 1.9 |
| | number of black foreign substances | small | small |
| results: after 3 months | residence stability ΔE | 2 | 2.1 |
| | number of black foreign substances | small | small |

Ex.: Example C.Ex.: Comparative Example

(*): added and mixed in a reactor at the time of melting right after melt polymerization

(#): added and mixed using double-screw extruder

Table 11

| | experiment No. | Ex.50 | Ex.51 | C.Ex.10 |
|---|---|---|---|---|
| (A) aromatic polycarbonate | PC-No | PC-15 | PC-15 | PC-18 |
| | viscosity-average molecular weight | 15300 | 15300 | 22500 |
| catalyst | nitrogen-containing or phosphorus-containing basic compound; type | none | none | TMAH |
| | quantity (μ chemical equivalent/1 mol-BPA) | | | 100 |
| | alkali metal compound; type | none | none | BPA2Na salt |
| | quantity (μ chemical equivalent/1 mol-BPA) | | | 0.5 |
| (B) specific phosphonium salt | type | B-12(#) | B-12(#) | none |
| | quantity (μmol/1 mol-BPA) | | | |
| | quantity (ppm-PC) | 10 | 10 | |
| sulfonic acid derivative | type | none | none | none |
| | quantity (μmol/1 mol-BPA) | | | |
| | quantity (ppm-PC) | | | |
| | melt viscosity stability (%) | 0.1 | 0 | 1 |
| terminal capping agent | type of salicylate | none | none | none |
| | terminal hydroxy group concentration;(mol %) | 6 | 6 | 49 |
| (E) ester of polyhydric alcohol and higher fatty acid | type | E-4(#) | E-4(#) | E-5(#) |
| | concentration; (ppm) | 100 | 100 | 1000 |
| (G) phosphite | type | G-4(#) | G-4(#) | G-4(#) |
| | concentration; (ppm) | 30 | 30 | 200 |
| (H) phenol-based antioxidant | type | H-1(#) | H-1(#) | H-1(#) |
| | concentration; (ppm) | 100 | 100 | 100 |
| results: right after production of composition | residence stability ΔE | 2.4 | 2.5 | 3.8 |
| | number of black foreign substances | small | small | many |
| results: after 3 months | residence stability ΔE | 2.6 | 2.9 | 4.1 |
| | number of black foreign substances | small | little many | many |

Ex.: Example C.Ex.: Comparative Example
(*): added and mixed in a reactor at the time of melting right after melt polymerization
(#): added and mixed using double-screw extruder

Table 11 (continued)

| | experiment No. | C.Ex.11 | Ex.52 |
|---|---|---|---|
| (A) aromatic polycarbonate | PC-No | PC-19 | PC-19 |
| | viscosity-average molecular weight | 22500 | 22500 |
| catalyst | nitrogen-containing or phosphorus-containing basic compound; type | TMAH | TMAH |
| | quantity (μ chemical equivalent/1 mol-BPA) | 100 | 100 |
| | alkali metal compound; type | BPA2Na salt | BPA2Na salt |
| | quantity (μ chemical equivalent/1 mol-BPA) | 0.5 | 0.5 |
| (B) specific phosphonium salt | type | none | B-12(#) |
| | quantity (μmol/1 mol-BPA) | | |
| | quantity (ppm-PC) | | 10 |
| sulfonic acid derivative | type | DBSP(*) | DBSP(*) |
| | quantity (μmol/1 mol-BPA) | | |
| | quantity (ppm-PC) | 1 | 1 |
| | melt viscosity stability (%) | 0 | 0 |
| terminal capping agent | type of salicylate | SAM(*) | SAM(*) |
| | terminal hydroxy group concentration;(mol %) | 25 | 25 |
| (E) ester of polyhydric alcohol and higher fatty acid | type | E-5(#) | E-5(#) |
| | concentration; (ppm) | 1000 | 1000 |
| (G) phosphite | type | G-4(#) | G-4(#) |
| | concentration; (ppm) | 200 | 200 |
| (H) phenol-based antioxidant | type | H-1(#) | H-1(#) |
| | concentration; (ppm) | 100 | 100 |
| results: right after production of composition | residence stability ΔE | 2.9 | 2.4 |
| | number of black foreign substances | little many | small |
| results: after 3 months | residence stability ΔE | 3.3 | 2.5 |
| | number of black foreign substances | many | small |

Ex.: Example C.Ex.: Comparative Example
(*): added and mixed in a reactor at the time of melting right after melt polymerization
(#): added and mixed using double-screw extruder

Abbreviations in Tables 2 to 11 mean as follows.

B) specific phosphoric acid phosphonium salts:

B-1 tris(tetramethylphosphonium)phosphate
B-2 bis(tetrabutylphosphonium)monohydrogen phosphate
B-3 tetramethylphosphonium dihydrogen phosphate
B-4 bis(tetramethylphosphonium)phenylphosphonate
B-5 (tetramethylphosphonium)monohydrogen phenylphosphonate
B-6 tris(tetramethylphosphonium)phosphite
B-7 bis(tetrabutylphosphonium)monohydrogen phosphite
B-8 (tetrabutylphosphonium)dihydrogen phosphite
B-9 tris(tetramethylphosphonium)borate
B-10 bis(tetrabutylphosphonium)monohydrogen borate
B-11 (tetrabutylphosphonium)dihydrogen borate
B-12 bis(tetramethylphosphonium)monohydrogen phosphate
B-13 (tetramethylphosphonium)dihydrogen pyrophosphate
B-14 (tetrabutylphosphonium)trihydrogen pyrophosphate
B-15 tetrabutylphosphonium monohydrogen pyrophosphite

C) radical scavenger:

C-1 2-t-butyl-6-(3-t-butyl-2-hydroxy-5-methylbenzyl)-4-methylphenyl acrylate
C-2 2-[1-(2-hydroxy-3,5-di-t-pentylphenyl)ethyl]-4,6-di-t- pentylphenyl acrylate
C-3 5,7-di-t-butyl-3-(3,5-dimethylphenyl)-3H-benzofuran-2-one
C-4 5,7-di-t-pentyl-3-(3,4-dimethylphenyl)-3-H-benzofuran-2-one

D) phosphoric acid:

D-1 phosphoric acid
D-2 dibutyl phosphate
D-3 monobutyl phosphate
D-4 phosphorous acid
D-5 monooctyl phosphite
D-6 pyrophosphate acid

E) ester of polyhydric alcohol

E-1 ethylene glycol monostearate
E-2 propylene glycol monooleate
E-3 glycerol monooleate
E-4 glycerol monostearate
E-5 glycerol distearate
E-6 propylene glycol monobachyl ether
E-7 glycerol monobachyl ether
E-8 trimethylolpropane distearate
E-9 trimethylolpropane tetrastearate
E-10 glycerol tristearate
E-11 sorbitan monolaurate
E-12 D-11 pentaerythritol tetrastearate

G) phosphite-based compound:

G-1 trisnonylphenyl phosphite
G-2 bis(2,4-di-t-butylphenyl)pentaerythrityl diphosphite
G-3 tetrakis(2,4-di-t-butylphenyl)diphenyl-4,4'-diphosphonite
G-4 tris(2,4-di-t-butylphenyl)phosphite

H) phenol-based antioxidant:

H-1 n-octadecyl-3-(4'-hydroxy-3',5'-di-t-butylphenyl) propionate

F) bluing agent:

V-1 of Arimoto Kagaku Co., Ltd. (Plast Violet 8840)

Example 53 (evaluation of sheet)

A composition comprising the above polymer PC-20, 100 ppm of G-4 and 0.8 ppm of V-1 was prepared, molten and quantitatively supplied to the T die of a molding machine by a gear pump. It was melt extruded into the form of a sheet having a thickness of 2 mm or 0.2 mm and a width of 800 mm while it was sandwiched between a mirror cooling roll and a mirror roll or one side thereof was in contact with one of the rolls.

A visible light curable plastic adhesive [BENEFIX PC of Ardel Co., Ltd.] was applied to one side of the obtained aromatic polycarbonate sheet (thickness of 2 mm) to form an adhesive layer which was then extruded in one direction such that air bubbles were not contained between the sheet and the adhesive and exposed to 5,000 mJ/cm$^2$ radiation by an photo-curing apparatus with exclusive visible light metal halide lamp to obtain a laminate sheet. When the bonding strength of the obtained laminate sheet was measured in accordance with JIS K-6852 (method of testing the compression shear bonding strength of an adhesive), it was 10.4 MPa (106 kgf/cm$^2$).

Meanwhile, the aromatic polycarbonate sheet having a thickness of 0.2 mm was printed with a uniform mixture of an ink [Natsuda 70-9132: color 136D smoke] and a solvent [isophorone/cyclohexane/isobutanol = 40/40/20 (wt%)] by a silk screen printer and dried at 100°C for 60 minutes. Printing was satisfactory without a transfer failure on the printed ink surface.

Separately, a sheet (thickness of 0.2 mm) printed with a printing ink obtained by mixing together 30 parts of a polycarbonate resin (specific viscosity of 0.895, Tg of 175° C) obtained from a general interfacial polycondensation reaction between 1,1-bis(4-hydroxyphenyl)cyclohexane and phosgene, 15 parts of Plast Red 8370 (of Arimoto Kagaku Kogyo Co., Ltd.) as a dye and 130 parts of dioxane as a solvent was set in an injection molding metal mold and insert molding was carried out using a polycarbonate resin pellet (Panlite L-1225 of Teijin Chemicals, Ltd.) at a molding temperature of 310°C. The pattern of the printed portion of the insert molded product was free from such abnormalities as bleeding and blurring and an insert molded product whose printed portion had an excellent appearance was obtained.

Examples 54 to 60 (evaluation of polymer blend compound)

A composition containing the above polymer PC-20, 100 ppm of G-4, 0.8 ppm of V-1 and 0.05 wt% of trimethyl phosphate was prepared and uniformly mixed with components shown in Tables 3 and 4 using a tumbler. The resulting mixture was pelletized by a 30 mm-diameter vented twin-screw extruder (KTX-30 of Kobe Steel Co., Ltd.) at a cylinder temperature of 260°C and a vacuum degree of 1.33 kPa (10 mmHg) under deaeration, the obtained pellet was dried at 120° C for 5 hours and a molded piece for measurement was formed from the pellet by an injection molding machine (SG150U of Sumitomo Heavy Industries, Ltd.) at a cylinder temperature of 270°C and a mold temperature of 80° C and evaluated. The results are shown in Tables 12 and 13. Symbols in Tables 12 and 13 mean the following.

(1)-1 ABS: styrene-butadiene-acrylonitrile copolymer; Suntac UT-61; Mitsui Chemicals, Inc.)
(1)-2 AS: styrene-acrylonitrile copolymer; Stylac-AS 767 R27; Asahi Chemical Industry, Co., Ltd.
(1)-3 PET: polyethylene terephthalate; TR-8580; Teijin Limited, intrinsic viscosity of 0.8
(1)-4 PBT: polybutylene terephthalate; TRB-H; Teijin Limited, intrinsic viscosity of 1.07
(2)-1 MBS: methyl (meth)acrylate-butadiene-styrene copolymer; Kaneace B-56; Kaneka Corporation
(2)-2 Z-1: butadiene-alkylacrylate-alkylmethacrylate copolymer; Paraloid EXL-2602; Kureha Chemical Industry Co., Ltd.
(2)-3 Z-2: composite rubber having a network structure that a polyorganosiloxane component and a polyalkyl(meth) acrylate rubber component penetrate into each other; Metabrene S-2001; Mitsubishi Rayon Co., Ltd.
(3)-1 T: talc; HS-T0.8; Hayashi Kasei Co., Ltd., average particle diameter L of 5 μm measured by laser diffraction method, L/D of 8
(3)-2 G: glass fiber; chopped strand ECS-03T-511; Nippon Electric Glass Co., Ltd., urethane bundling, fiber diameter of 13 μm
(3)-3 W: wollastonite; Saikatec NN-4; Tomoe Kogyo Co., Ltd., number average fiber diameter D obtained from observation through electron microscope of 1.5 μm, average fiber length of 17 μm, aspect ratio L/D of 20
(4) WAX: olefin-based wax obtained by copolymerizing α-olefin and maleic anhydride; Diacalna P30; Mitsubishi

Kasei Co., Ltd. (maleic anhydride content of 10 wt%) physical property evaluation items

(A) flexural modulus

The flexural modulus was measured in accordance with ASTM D790.

(B) notched impact value

An impact value was measured by colliding a weight with a 3.2 mm thick test sample from the notch side in accordance with ASTM D256.

(C) fluidity

The fluidity was measured by an Archimedes type spiral flow (thickness of 2 mm, width of 8 mm) at a cylinder temperature of 250° C, a mold temperature of 80° C and an injection pressure of 98.1 MPa.

(D) chemical resistance

1 % distortion was provided to a tensile test piece used in ASTM D638 and immersed in Esso regular gasoline heated at 30°C for 3 minutes to measure the tensile strength and calculate the tensile strength retention of the test piece. The retention was calculated from the following equation. retention (%) = (strength of processed sample/strength of unprocessed sample) x 100

Table 12

| | | | Ex.54 | Ex.55 | Ex.56 | Ex.57 |
|---|---|---|---|---|---|---|
| composition | polycarbonate PC-20 | wt% | 60 | 60 | 60 | 60 |
| | ABS | wt% | 40 | 40 | 40 | |
| | AS | wt% | | | | 30 |
| | MBS | wt% | | | | 10 |
| | total | wt | 100 | 100 | 100 | 100 |
| | G | wt | 15 | | | 15 |
| | W | wt | | 15 | | |
| | T | wt | | | 15 | |
| | WAX | wt | | 1 | 1 | |
| characteristic properties | flexural modulus | MPa | 3,450 | 3,200 | 2,900 | 3,300 |
| | fluidity | cm | 30 | 27 | 29 | 34 |
| | notched impact value | J/m | 75 | 70 | 50 | 85 |

Ex.: Example wt: part by weight

Table 13

| | | | Ex.58 | Ex.59 | Ex.60 |
|---|---|---|---|---|---|
| composition | polycarbonate PC-20 | wt% | 70 | 70 | 70 |
| | PBT | wt% | | 30 | 5 |
| | PET | wt% | 30 | | 25 |
| | total | wt | 100 | 100 | 100 |
| | Z-1 | wt | 5 | 5 | |
| | Z-2 | wt | | | 5 |
| | G | wt | 20 | | |
| | W | wt | | 10 | |
| | T | wt | | | 10 |
| | WAX | wt | | 1 | 1 |
| characteristic properties | flexural modulus | MPa | 5,770 | 3,560 | 3,400 |
| | chemical resistance | % | 89 | 85 | 83 |
| | notched impact value | J/m | 215 | 540 | 519 |

Ex.: Example wt: part by weight

Example 61

The polycarbonate composition obtained in Example 31 was molded into an optical disk substrate. The injection molding machine (model name: MO40D3H) of Nissei Jushi Kogyo Co., Ltd., a mold and a stamper for molding a phase variable optical recording medium substrate having a memory capacity of 2.6 GB (disk diameter of 120 mm and thickness of 0.6 mm) were used. The mold temperature was set to 123° C for a movable portion and 128° C for a fixed portion. The temperatures of a cutter and a sprue were set to 60° C. The cylinder temperature of 380° C was used as the resin temperature. The polycarbonate composition obtained in Example 1 at an injection speed of 250 mm/sec was filled into a mold cavity to mold 100 optical disk substrates continuously. All the disk substrates were

smoothly separated from the mold during continuous molding and a release failure did not occur. The obtained substrates were all transparent and had the excellent transferability of information recording groove bits, was free from deformation such as warp and preferred as optical disk substrates.

## Claims

**1.** An aromatic polycarbonate composition comprising:

(A) an aromatic polycarbonate comprising mainly a recurring unit represented by the following formula (1):

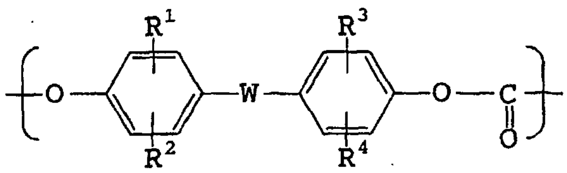

(1)

wherein $R^1$, $R^2$, $R^3$ and $R^4$ are each independently a hydrogen atom, alkyl group having 1 to 10 carbon atoms, aryl group having 6 to 10 carbon atoms or aralkyl group having 7 to 10 carbon atoms, and W is an alkylene group having 1 to 6 carbon atoms, alkylidene group having 2 to 10 carbon atoms, cycloalkylene group having 6 to 10 carbon atoms, cycloalkylidene group having 6 to 10 carbon atoms, alkylene-arylene-alkylene group having 8 to 15 carbon atoms, oxygen atom, sulfur atom, sulfoxide group or sulfone group, and
(B) at least one phosphonium salt selected from the group consisting of a phosphoric acid phosphonium salt, phosphonic acid phosphonium salt, condensed phosphoric acid phosphonium salt, phosphorous acid phosphonium salt, phosphonous acid phosphonium salt and boric acid phosphonium salt, and having a viscosity average molecular weight of 10,000 to 100,000 and a melt viscosity stability of 0.5 % or less.

**2.** The aromatic polycarbonate composition of claim 1, wherein the phosphoric acid phosphonium salt is an acidic phosphoric acid phosphonium salt, the phosphonic acid phosphonium salt is an acidic phosphonic acid phosphonium salt, the condensed phosphoric acid phosphonium salt is a condensed acidic phosphoric acid phosphonium salt, the phosphorous acid phosphonium salt is an acidic phosphorous acid phosphonium salt, the phosphonous acid phosphonium salt is an acidic phosphonous acid phosphonium salt and the boric acid phosphonium salt is an acidic boric acid phosphonium salt.

**3.** The aromatic polycarbonate composition of claim 1 which contains the phosphonium salt (B) in an amount of 0.01 x $10^{-4}$ to 30 x $10^{-4}$ parts by weight in terms of phosphorus atoms based on 100 parts by weight of the aromatic polycarbonate (A).

**4.** The aromatic polycarbonate composition of claim 1, wherein the aromatic polycarbonate (A) has a viscosity average molecular weight of 10,000 to 100,000, a melt viscosity stability of 0.5 % or less and a terminal hydroxy group concentration of 50 mol% or less based on the total of all the terminal groups.

**5.** The aromatic polycarbonate composition of claim 4, wherein the aromatic polycarbonate (A) is obtained by melt polycondensing the corresponding aromatic dihydroxy compound and a carbonic acid diester as starting materials.

**6.** The aromatic polycarbonate composition of claim 1 which further comprises (C) a carbon-radical scavenger in an amount of 0.5 x $10^{-4}$ to 500 x $10^{-4}$ parts by weight based on 100 parts by weight of the aromatic polycarbonate.

**7.** The aromatic polycarbonate composition of claim 6, wherein the carbon-radical scavenger (C) is an aryl ester of acrylic acid or a lactone.

**8.** The aromatic polycarbonate composition of claim 1 which further comprises (D) at least one selected from the group consisting of phosphoric acid, phosphorous acid, hypophosphorous acid, condensed phosphoric acid and condensed phosphorous acid in an amount of 1 x $10^{-4}$ to 100 x $10^{-4}$ parts by weight based on 100 parts by weight of the aromatic polycarbonate.

**9.** The aromatic polycarbonate composition of claim 1 which further comprises (E) an ester of a polyhydric alcohol and a higher fatty acid in an amount of $1 \times 10^{-3}$ to $3 \times 10^{-1}$ parts by weight based on 100 parts by weight of the aromatic polycarbonate.

**10.** The aromatic polycarbonate composition of claim 9, wherein the ester is a partial ester having an HLB value of 3 to 7.

**11.** The aromatic polycarbonate composition of claim 1 which further comprises (F) a bluing agent in an amount of $0.001 \times 10^{-4}$ to $100 \times 10^{-4}$ parts by weight based on 100 parts by weight of the aromatic polycarbonate.

**12.** The aromatic polycarbonate composition of claim 10, wherein the bluing agent (F) is an anthraquinone compound.

**13.** The aromatic polycarbonate composition of claim 1 which comprises a phosphoric acid phosphonium salt and/or a phosphorous acid phosphonium salt as the phosphonium salt (B) in an amount of $0.01 \times 10^{-4}$ to $30 \times 10^{-4}$ parts by weight in terms of phosphorus atoms based on 100 parts by weight of the aromatic polycarbonate (A) and (E) an ester of a polyhydric alcohol and a higher fatty acid in an amount of $1 \times 10^{-3}$ to $3 \times 10^{-1}$ parts by weight based on 100 parts by weight of the aromatic polycarbonate, and optionally (C) a carbon-radical scavenger.

**14.** The aromatic polycarbonate composition of claim 1 which comprises a phosphoric acid phosphonium salt and/or a phosphorous acid phosphonium salt as the phosphonium salt (B) in an amount of $0.01 \times 10^{-4}$ to $30 \times 10^{-4}$ parts by weight in terms of phosphorus atoms based on 100 parts by weight of the aromatic polycarbonate (A), (E) an ester of a polyhydric alcohol and a higher fatty acid in an amount of $1 \times 10^{-3}$ to $3 \times 10^{-1}$ parts by weight based on 100 parts by weight of the aromatic polycarbonate and (F) a bluing agent in an amount of $0.001 \times 10^{-4}$ to $100 \times 10^{-4}$ parts by weight based on 100 parts by weight of the aromatic polycarbonate and optionally (C) a carbon-radical scavenger.

**15.** The aromatic polycarbonate composition of claim 1 which further comprises a solid filler in an amount of 1 to 150 parts by weight based on 100 parts by weight of the aromatic polycarbonate (A).

**16.** The aromatic polycarbonate composition of clam 1 which further comprises a thermoplastic resin different from the aromatic polycarbonate (A) in an amount of 10 to 150 parts by weight based on 100 parts by weight of the aromatic polycarbonate (A).

**17.** A process for producing an aromatic polycarbonate composition comprising the steps of:

(1) melt polycondensing a dihydroxy compound comprising mainly an aromatic dihydroxy compound represented by the following formula (2):

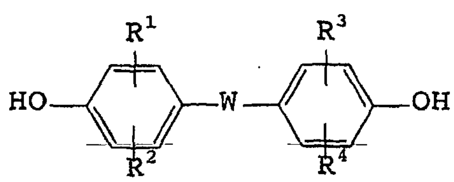

(2)

wherein $R^1$, $R^2$, $R^3$ and $R^4$ and W are as defined in the above formula (1),
and a carbonate bond forming precursor in the presence of an ester exchange catalyst, and
(2) adding (a) at least one phosphonium salt selected from the group consisting of a phosphoric acid phosphonium salt, phosphonic acid phosphonium salt, condensed phosphoric acid phosphonium salt, phosphorous acid phosphonium salt, phosphonous acid phosphonium salt and boric acid phosphonium salt, or (b) a combination of the above phosphonium salt and at least one sulfonic acid derivative selected from the group consisting of a sulfonic acid phosphonium salt, sulfonic acid ammonium salt, sulfonic acid lower alkyl ester and sulfonic acid to the obtained aromatic polycarbonate in molten state.

**18.** The process of claim 17, wherein (i) at least one basic compound selected from the group consisting of a basic nitrogen-containing compound and a basic phosphorus-containing compound is used in an amount of $5 \times 10^{-5}$ to $1 \times 10^{-3}$ chemical equivalent and (ii) an alkali metal compound is used in an amount of $5 \times 10^{-8}$ to $1 \times 10^{-6}$ chemical equivalent based on 1 mol of the dihydroxy compound as ester exchange catalysts.

**19.** The process of claim 18, wherein the alkali metal compound is at least one selected from the group consisting of a rubidium compound and a cesium compound.

**20.** The process of claim 17, wherein the combination of the above phosphonium salt and at least one sulfonic acid derivative selected from the group consisting of a sulfonic acid phosphonium salt, sulfonic acid ammonium salt, sulfonic acid lower alkyl ester and sulfonic acid (b) is used such that the phosphonium salt is added after the sulfonic acid derivative.

**21.** The process of claim 17, wherein the step (1) is carried out in a melt polycondensation apparatus and the above step (2) is carried out in a melt extruder.

**22.** The process of claim 20, wherein the phosphonium salt (a) or the combination of the phosphonium salt and the sulfonic acid derivative (b) are added as a master batch for the aromatic polycarbonate.

**23.** The process of claim 20, wherein only the phosphonium salt of the combination of the phosphonium salt and the sulfonic acid derivative (b) is added as a master batch for the aromatic polycarbonate.

**24.** A process for producing an aromatic polycarbonate composition comprising the steps of:

(1) preparing a pellet of an aromatic polycarbonate comprising mainly a recurring unit represented by the following formula (1):

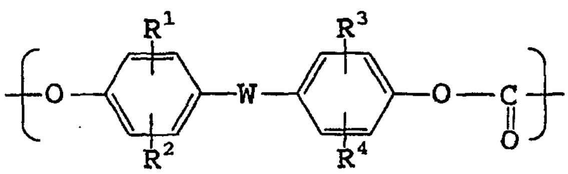 (1)

wherein $R^1$, $R^2$, $R^3$ and $R^4$ are each independently a hydrogen atom, alkyl group having 1 to 10 carbon atoms, aryl group having 6 to 10 carbon atoms or aralkyl group having 7 to 10 carbon atoms, and W is an alkylene group having 1 to 6 carbon atoms, alkylidene group having 2 to 10 carbon atoms, cycloalkylene group having 6 to 10 carbon atoms, cycloalkylidene group having 6 to 10 carbon atoms, alkylene-arylene-alkylene group having 8 to 15 carbon atoms, oxygen atom, sulfur atom, sulfoxide group or sulfone group, and
(2) melting the above pellet and adding and mixing at least one phosphonium salt selected from the group consisting of a phosphoric acid phosphonium salt, phosphonic acid phosphonium salt, condensed phosphoric acid phosphonium salt, phosphorous acid phosphonium salt, phosphonous acid phosphonium salt and boric acid phosphonium salt with the molten pellet.

**25.** The process of claim 24, wherein the aromatic polycarbonate in the step (1) contains at least one sulfonic acid derivative selected from the group consisting of a sulfonic acid phosphonium salt, sulfonic acid ammonium salt, sulfonic acid lower alkyl ester and sulfonic acid.

**26.** A molded product comprising the aromatic polycarbonate composition of claim 1, 13 or 14.

**27.** A substrate for optical information recording media, which comprises the aromatic polycarbonate composition of claim 1 or 13.

**28.** A sheet comprising the aromatic polycarbonate composition of claim 1 or 14.

**29.** Use of the aromatic polycarbonate composition of claim 1 or 13 as the material of a substrate for optical information recording media.

**30.** Use of the aromatic polycarbonate composition of claim 1 or 14 as the material of a sheet.

# INTERNATIONAL SEARCH REPORT

International application No.
PCT/JP01/02777

A. CLASSIFICATION OF SUBJECT MATTER
Int.Cl[7] C08L69/00, C08K5/103, C08K5/49, C08J5/00 CFD

According to International Patent Classification (IPC) or to both national classification and IPC

B. FIELDS SEARCHED

Minimum documentation searched (classification system followed by classification symbols)
Int.Cl[7] C08L69/00

Documentation searched other than minimum documentation to the extent that such documents are included in the fields searched
Jitsuyo Shinan Koho 1926-2001 Toroku Jitsuyo Shinan Koho 1994-2001
Kokai Jitsuyo Shinan Koho 1971-2001 Jitsuyo Shinan Toroku Koho 1996-2001

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br>Y<br>A | JP, 8-12812, A (Toho Chem. Ind. Co., Ltd.), 16 January, 1996 (16.01.96), page 2, left column, lines 2 to 15; page 3, left column, lines 19 to 41 (Family: none) | 1-5,15-17, 21,24,26-30<br>18-20,22,23,25<br>6-14 |
| X<br><br>Y<br><br><br>A | EP, 448096, A (Sumitomo Chemical Company, Limited), 25 September, 1991 (25.09.91), page 2, line 55 to page 3, line 4; page 3, lines 16 to 18; page 3, lines 28 to 29; page 10, line 56 to page 11, line 18 & JP, 3-273061, A page 1, lower left column, line 5 to the 1st line from the bottom; page 2, lower right column, line 14 to page 3, upper left column, line 10; page 3, upper right column, lines 9 to 12; page 3, lower left column, lines 15 to 18 & US, 5510404, A | 1-5,15,17, 21,24,26-30<br>18-20,22,23,25<br><br><br>6-14 |
| Y<br><br>A | JP, 11-100497, A (Teijin Limited), 13 April, 1999 (13.04.99), page 2, left column, line 2 to page 2, right column, line 25 (Family: none) | 18-20,22,23,25<br><br>6-14 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
25 June, 2001 (25.06.01)

Date of mailing of the international search report
03 July, 2001 (03.07.01)

Name and mailing address of the ISA/
Japanese Patent Office

Authorized officer

Facsimile No.

Telephone No.

Form PCT/ISA/210 (second sheet) (July 1992)